(19) Europäisches Patentamt
European Patent Office
Office européen des brevets

(11) **EP 2 485 032 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **12151529.0**

(22) Anmeldetag: **18.01.2012**

(51) Int Cl.:
*G01M 11/06* (2006.01)   *B60Q 1/08* (2006.01)
*H01J 61/34* (2006.01)   *H01J 61/82* (2006.01)

(54) **Verfahren und Vorrichtung zum Justieren einer Grundeinstellung eines Scheinwerfers eines Kraftfahrzeugs**

Method and advice for adjusting a basic setting of the headlamp of a motor vehicle

Procédé et dispositif d'ajustement d'un réglage de base d'un phare de véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2011 DE 102011003550**

(43) Veröffentlichungstag der Anmeldung:
**08.08.2012 Patentblatt 2012/32**

(73) Patentinhaber: **Automotive Lighting Reutlingen GmbH**
**72762 Reutlingen (DE)**

(72) Erfinder: **Dreier, Bernd**
**72116 Mössingen (DE)**

(74) Vertreter: **DREISS Patentanwälte PartG mbB**
**Friedrichstraße 6**
**70174 Stuttgart (DE)**

(56) Entgegenhaltungen:
| | |
|---|---|
| EP-A1- 0 867 336 | EP-A1- 2 128 589 |
| EP-A1- 2 128 590 | EP-A1- 2 630 463 |
| WO-A1-2012/048795 | DE-A1- 2 946 561 |
| DE-A1- 19 851 640 | DE-A1-102005 040 980 |

**Beschreibung**

Die vorliegende Erfindung betrifft ein Verfahren und eine Vorrichtung zum Justieren einer Grundeinstellung eines Scheinwerfers eines Kraftfahrzeugs mit den Merkmalen der Oberbegriffe der unabhängigen Ansprüche. Ein solches Verfahren und eine solche Vorrichtung sind jeweils aus der Druckschrift D1 (EP 2 128 590 A1) bekannt. Diese Druckschrift beschäftigt sich mit dem Justieren einer horizontalen Helldunkelgrenze und erfordert eine Messung des Abstands zwischen der Messfläche und der Lichtquelle des Scheinwerfers. Nach der Druckschrift D1 wird eine Frontkamera zu einem Frontscheinwerfer kalibriert.

Der Scheinwerfer umfasst mindestens eine Lichtquelle zum Aussenden von Licht, wobei der Scheinwerfer ein Lichtbündel mit mindestens einer Helldunkelgrenze erzeugt. Außerdem betrifft die Erfindung eine Vorrichtung zum Justieren einer Grundeinstellung eines Scheinwerfers eines Kraftfahrzeugs, wobei der Scheinwerfer mindestens eine Lichtquelle zum Aussenden von Licht umfasst und ein Lichtbündel mit mindestens einer Helldunkelgrenze erzeugt.

Aus dem Stand der Technik sind Kraftfahrzeuge bekannt, die mit Einrichtungen zum Erfassen und Verarbeiten von Abbildern eines Bereichs vor dem Kraftfahrzeug, bspw. in Form eines Bildverarbeitungssystems, ausgestattet sind. Das Bildverarbeitungssystem umfasst geeignete Sensoren zum Erfassen des Bereichs vor dem Kraftfahrzeug, bspw. in Form einer Kamera. Ferner umfassen die Bildverarbeitungssysteme auch eine Verarbeitungseinheit, welche die erfassten Abbilder des Bereichs vor dem Kraftfahrzeug in entsprechende elektrische Signale umwandelt und für eine Weiterverarbeitung aufbereitet. Die elektrischen Signale der Verarbeitungseinheit werden dann durch eine Auswerteeinheit weiterverarbeitet, um bspw. bestimmte Objekte in den Abbildern des Bereichs vor dem Kraftfahrzeug zu detektieren und zu lokalisieren.

Die Bildverarbeitungssysteme sind bspw. Teil von komplexen Assistenzsystemen, die in modernen Kraftfahrzeugen verschiedene Assistenzfunktionen wahrnehmen können. So werden Bildverarbeitungssysteme bspw. für Spurhalteassistenten, Verkehrszeichenerkennung, Fernlichtassistenten, sowie für eine Realisierung einer Teilfernlichtfunktion eingesetzt. Im Rahmen eines Spurhalteassistenten werden Fahrbahnmarkierungen und Fahrbahnränder detektiert, um dem Fahrer des Kraftfahrzeugs vor einem ungewollten Verlassen der befahrenen Fahrspur zu warnen. Bei einer Verkehrszeichenerkennung werden Verkehrszeichen entlang der befahrenen Fahrbahn detektiert und analysiert und dem Fahrer des Fahrzeugs auf einem Bildschirm oder durch Projektion auf die Windschutzscheibe präsentiert. Bei einem Fernlichtassistenten werden entgegenkommende und vorausfahrende Verkehrsteilnehmer detektiert und wird das Fernlicht automatisch geschaltet (aufgeblendet, abgeblendet). Bei einer Teilfernlichtfunktion werden ebenfalls entgegenkommende und vorausfahrende Verkehrsteilnehmer detektiert und lokalisiert, so dass in dem Fernlicht gezielt ein Bereich abgeschattet werden kann, in dem sich der oder die detektierten und lokalisierten Verkehrsteilnehmer befinden. Diejenigen Bereiche der Fahrbahn vor dem Kraftfahrzeug, wo keine entgegenkommenden Verkehrsteilnehmer detektiert wurden, werden dabei nach wie vor mit Fernlicht ausgeleuchtet. Der abgeschattete Bereich des Fernlichts, in dem sich die entgegenkommenden und/oder vorausfahrenden Verkehrsteilnehmer befinden, wird seitlich durch im Wesentlichen vertikal verlaufende Helldunkelgrenzen begrenzt.

Wenn die Bildverarbeitungssysteme für die Steuerung von Scheinwerferfunktionen verwendet werden, ist ein Abgleich zwischen den Scheinwerfern und dem Bildverarbeitungssystem, insbesondere der Kamera, unumgänglich. Es ist denkbar, dass nicht die Grundeinstellung eines Scheinwerfer, sondern die eines in den Scheinwerfer beweglich angeordneten Lichtmoduls justiert wird. Zur Vereinfachung wird in der vorliegenden Anmeldung jedoch von einem Justieren des Scheinwerfers gesprochen, selbst wenn eigentlich ein Lichtmodul des Scheinwerfers justiert wird. Nach dem derzeitigen Stand der Technik erfolgt der Abgleich indirekt über das Fahrzeugkoordinatensystem (die Fahrzeuglängsachse) d.h. jedes der Systeme wird für sich auf die Fahrzeuglängsachse manuell justiert, so dass letzten Endes auch die Kamera des Bildverarbeitungssystems und die Scheinwerfer relativ zueinander justiert sein müssten.

Nach dem bekannten Stand der Technik erfolgt die Referenzierung (Initialisierung) der Achsen eines Scheinwerfers entweder durch einen Sensor an der zu referenzierenden Achse oder durch einen definierten mechanischen Anschlag, gegen den der Scheinwerfer gefahren wird, wobei der mechanische Anschlag oder die Sensorflanke als Referenz für die Referenzierung des Scheinwerfers verwendet wird.

Die Grundeinstellung (Kalibrierung) eines Scheinwerfers erfolgt nach dem bekannten Stand der Technik immer manuell durch eine mechanische Verstellung entweder eines Lichtmoduls des Scheinwerfers oder des Scheinwerfers selbst relativ zu einer Kraftfahrzeugkarosserie.

Aus der EP 2 050 618 A2 ist ein Verfahren zum Justieren einer Grundeinstellung eines Kraftfahrzeugscheinwerfers bekannt. Dabei erfolgt die Justage des Scheinwerfers mit Hilfe einer optischen Justagemarkierung, die in einen Bezug zu einer Referenzmarkierung gebracht wird. Nachteilig bei dem bekannten Verfahren ist es, dass die zusätzliche Justagemarkierung erzeugt werden muss, um die Grundeinstellung des Scheinwerfers überhaupt justieren zu können. Dazu sind zusätzliche Lichtquellen erforderlich, die Bauraum und Platz in dem Scheinwerfer beanspruchen und zusätzliche Kosten verursachen.

Ausgehend von dem beschriebenen Stand der Technik liegt der vorliegenden Erfindung die Aufgabe zugrunde, das Justieren der Grundeinstellung eines Scheinwerfers eines Kraftfahrzeugs zu vereinfachen, zu beschleunigen und zu automatisieren.

Zur Lösung dieser Aufgabe wird ein Verfahren zum Justieren einer Grundeinstellung eines Kraftfahrzeugscheinwerfers der eingangs genannten Art vorgeschlagen, bei dem die nachfolgenden Schritte in der angegebenen Reihenfolge nacheinander ausgeführt werden:

a) Erfassen einer Position der Helldunkelgrenze auf einer vor dem Kraftfahrzeug angeordneten Messfläche während einer ersten Messung;

b) Schwenken des Lichtbündels um einen vorgegebenen Schwenkwinkel in eine Richtung im Wesentlichen senkrecht zur erfassten Helldunkelgrenze;

c) Erfassen einer neuen Position der Helldunkelgrenze auf der Messfläche während einer weiteren Messung;

d) wahlweise Wiederholen der Schritte b) und c); und

e) Ermitteln eines Korrekturwinkels zum Justieren der Grundeinstellung aus den Ergebnissen der Messungen und anderen bekannten Parametern.

Erfindungsgemäß wird also ein Verfahren vorgeschlagen, bei dem eine Einrichtung zum Erfassen und Verarbeiten von Abbildern eines Bereichs vor dem Kraftfahrzeug nicht mehr separat vor dem Kraftfahrzeugscheinwerfer auf eine Bezugsachse, bspw. die Fahrzeuglängsachse, justiert wird. Vielmehr wird bei der vorliegenden Erfindung die Bilderfassungseinrichtung unmittelbar in Bezug zu dem Scheinwerfer gesetzt und die Bilderfassungseinrichtung und der Scheinwerfer relativ zueinander justiert.

Für die erfindungsgemäß vorgeschlagene Justage der Grundeinstellung des Scheinwerfers sind keine zusätzlichen Hardwarekomponenten in dem Scheinwerfer und/oder Kraftfahrzeug erforderlich. Eine Bilderfassungseinrichtung in Form einer Kamera ist in vielen modernen Kraftfahrzeugen für verschiedene Assistenzsysteme sowieso bereits vorhanden. Zur Realisierung der vorliegenden Erfindung muss lediglich die bereits vorhandene und eigentlich anderweitig genutzte Kamera entsprechend angesteuert und die von ihr erfassten Abbilder des Bereichs vor dem Kraftfahrzeug in geeigneter Weise ausgewertet werden. Auch Mittel zum Schwenken des Lichtbündels um einen vorgegebenen Schwenkwinkel sind in Scheinwerfern moderner Kraftfahrzeuge bereits vorhanden. Durch diese Schwenkmittel kann durch Schwenken in horizontaler Richtung eine Kurvenlichtfunktion und durch Schwenken in vertikaler Richtung eine Leuchtweitenregelung realisiert werden. Zur Realisierung der vorliegenden Erfindung müssen diese Schwenkmittel lediglich in geeigneter Weise angesteuert werden, damit das Lichtbündel um einen vorgegebenen Schwenkwinkel in eine Richtung senkrecht zu der im Rahmen einer ersten Messung erfassten Helldunkelgrenze verschwenkt wird.

Die vorliegende Erfindung kann zur Justage der Grundeinstellung von Kraftfahrzeugscheinwerfern sowohl in horizontaler als auch in vertikaler Richtung eingesetzt werden. Zur Justage der Grundeinstellung in horizontaler Richtung wird vorzugsweise die Position einer vertikalen Helldunkelgrenze einer Teilfernlichtverteilung erfasst und ausgewertet. Zur Justage der Grundeinstellung in vertikaler Richtung wird vorzugsweise eine horizontale Helldunkelgrenze einer abgeblendeten Lichtverteilung, bspw. einer Abblendlichtverteilung oder einer Nebellichtverteilung, erfasst und ausgewertet.

Durch die vorgeschlagene automatische Kalibrierung der beiden Systeme (Scheinwerfer und Bildverarbeitungseinrichtung) zueinander, können die Toleranzen des Gesamtsystems deutlich verbessert werden, so dass die Position der Helldunkelgrenze in der Richtung, in der die Grundeinstellung des Scheinwerfers justiert wurde, wesentlich genauer als bisher angefahren werden, was zu einer deutlichen Verbesserung der Ausleuchtung der Verkehrssituation vor dem Kraftfahrzeug führt.

Bei einem Teilfernlicht können die vertikalen Helldunkelgrenzen des abgeschatteten Bereichs, in dem sich die detektierten Verkehrsteilnehmer befinden, aus Sicherheitsgründen nicht bis direkt an die detektierten Verkehrsteilnehmer herangeführt werden. Aufgrund der Toleranzen des Gesamtsystems besteht sonst die Gefahr, dass die entgegenkommenden Verkehrsteilnehmer geblendet werden. Um dies trotz der Toleranzen zu verhindern, muss zwischen den vertikalen Helldunkelgrenzen und der ermittelten Position der detektierten Verkehrsteilnehmer ein Sicherheitsabstand eingehalten werden. Da durch die vorliegende Erfindung die Toleranzen des Gesamtsystems deutlich verringert werden, kann auch der Sicherheitsbereich verkleinert werden und können die vertikalen Helldunkelgrenzen dichter an die detektierten Verkehrsteilnehmer herangeführt werden. Das hat eine wesentlich bessere Ausleuchtung des Verkehrsgeschehens vor dem Kraftfahrzeug zur Folge.

In der nachfolgenden Tabelle sind die Toleranzen der Einzelsysteme eines Scheinwerfersystems zur Realisierung einer Teilfernlichtfunktion angegeben. Die Einzeltoleranzen addieren sich zu der Gesamttoleranz des Gesamtsystems. Die Tabelle enthält einen Vergleich des aus dem Stand der Technik bekannten indirekten Justageverfahrens, bei dem sowohl der Scheinwerfer als auch die Bildverarbeitungseinrichtung getrennt voneinander auf eine Bezugsachse, bspw. die Fahrzeuglängsachse, kalibriert werden und des erfindungsgemäßen Verfahrens, bei dem der Scheinwerfer und die Bilderfassungseinrichtung unmittelbar zueinander justiert werden. Dabei fallen die Einzeltoleranzen für die Grundeinstellung der Kamera relativ zu der Fahrzeuglängsachse sowie für die Grundeinstellung des Scheinwerfers relativ zur Fahrzeuglängsachse bei dem erfindungsgemäßen Verfahren weg. In der Summe ergibt sich bei dem erfindungsgemäßen Verfahren also eine Gesamttoleranz von etwa 0,5°, die im Vergleich zu der Gesamttoleranz von 0,9° des aus dem Stand der Technik bekannten indirekten Verfahrens eine Verringerung der Toleranz um etwa 45% bedeutet.

| Einzelsystem | Stand der Technik | Erfindung |
|---|---|---|
| Auflösung Kamera | 0,1° | 0,1° |
| Grundeinstellung Kamera | 0,2° | |
| Grundeinstellung Scheinwerfer | 0,2° | |
| Stell verzögerung Scheinwerfer | 0,2° | 0,2° |
| Hysteresescheinwerfer | 0,2° | 0,2° |
| Summe | 0,9° | 0,5° |

Die Fehler, die bei der aus dem Stand der Technik bekannten mechanischen Grundeinstellung der Scheinwerfer in einer Kraftfahrzeugwerkstatt gemacht werden, können jedoch noch deutlich größer als die oben in der Tabelle angegebenen Fehler sein. Mögliche Fehlerursachen sind bspw.:

- geringe Genauigkeit des Scheinwerfereinstellgeräts,
- ungenaue Ausrichtung des Scheinwerfereinstellgeräts zum Fahrzeug,
- ungenaue Ausrichtung der Lichtverteilung im Einstellgerät, so dass die Helldunkelgrenze nicht scharf abgebildet wird,
- Einstellung der horizontalen Grundeinstellung im Abblendlicht, jedoch nicht im Teilfernlicht.

Ein wichtiger Aspekt der vorliegenden Erfindung ist, dass keine zusätzlichen Hilfsvorrichtungen für die Kalibrierung/Justage der Grundeinstellung eines Kraftfahrzeugscheinwerfers benötigt werden. Insbesondere kann auf den Einsatz zusätzlicher Scheinwerfereinstellgeräte verzichtet werden. Vielmehr ist es ausreichend, wenn eine beliebige Messfläche vor dem Kraftfahrzeug vorhanden ist, auf der die Helldunkelgrenze abgebildet wird. Dabei kann die Messfläche senkrecht zur Fahrzeuglängsachse, schräg dazu oder sogar horizontal dazu ausgerichtet sein. In dem letzten Fall kann sogar die vor dem Kraftfahrzeug befindliche Fahrbahn als Messfläche genutzt werden. Das erfindungsgemäße Verfahren wird ggf. auf Anforderung des Fahrers des Kraftfahrzeugs, eines Werkstattmitarbeiters oder eines beliebigen Dritten, automatisch ausgeführt. Es bedarf dazu keinerlei Eingriffe von Personen, bspw. zum Bedienen eines Scheinwerfereinstellgeräts oder zum mechanischen Verstellen der Grundeinstellung des Scheinwerfers. Erfindungsgemäß wird durch mindestens zwei Messungen unterschiedlicher Positionen einer Helldunkelgrenze der durch den Scheinwerfer erzeugten abgeblendeten Lichtverteilung ein Korrekturwinkel ermittelt, der beim herkömmlichen Betrieb des Scheinwerfers bei der Ansteuerung des Scheinwerfers berücksichtigt wird. Ein Ansteuersignal des Scheinwerfers zur Positionierung einer vertikalen Helldunkelgrenze einer Teilfernlichtverteilung kann bspw. um den Korrekturwinkel korrigiert werden, so dass die vertikale Helldunkelgrenze mit einer wesentlich höheren Genauigkeit eingestellt werden kann. Dies erlaubt es, den Sicherheitsbereich zu detektierten Fahrzeugen im Bereich vor dem Kraftfahrzeug zu verringern und die vertikale Helldunkelgrenze dichter an die detektierten Fahrzeuge heranzuführen.

Gemäß einer vorteilhaften Weiterbildung der vorliegenden Erfindung wird vorgeschlagen, dass der Korrekturwinkel anhand trigonometrischer Funktionen berechnet wird. Die anderen bekannten Parameter, die bei der Ermittlung des Korrekturwinkels mit berücksichtigt werden, umfassen bspw. einen oder mehrere der nachfolgenden Werte: den vorgegebenen Schwenkwinkel, um den das Lichtbündel zwischen zwei aufeinanderfolgenden Messungen verschwenkt wird, Komponenten in X-, Y- und/oder Z-Richtung eines Abstands zwischen einer Bilderfassungseinrichtung des Kraftfahrzeugs und einer Lichtquelle des Scheinwerfers. Anhand trigonometrischer Funktionen können anhand der während der Messungen erfassten Positionen der Helldunkelgrenze auf der Messfläche Winkel ermittelt werden, die sich zwischen einer optischen Achse der Bilderfassungseinrichtung des Kraftfahrzeugs einerseits und Verbindungsgeraden von der Bilderfassungseinrichtung zu den erfassten Positionen der Helldunkelgrenzen andererseits ergeben. Bei einem vorgegebenen Winkel können auch Längen ermittelt werden.

Der Abstand der Messfläche von dem Kraftfahrzeug, d.h. der Abstand der Messfläche zu der Lichtquelle des Scheinwerfers bzw. zu der Bilderfassungseinrichtung des Kraftfahrzeugs, ist bei der vorliegenden Erfindung beliebig. Der Abstand zwischen der Messfläche und der Bilderfassungseinrichtung ist eine der Größen, die anhand trigonometrischer Funktionen aus den während der Messungen erfassten Positionen der Helldunkelgrenze ermittelt werden. Die bei der Berechnung des Korrekturwinkels berücksichtigten bekannten Parameter sind insbesondere ein Abstand zwischen der Bilderfassungseinrichtung und der Lichtquelle des Scheinwerfers in X- sowie in Z-Richtung. Dieser geometrische Bezug zwischen Scheinwerfer und Kamera ist für Kraftfahrzeuge eines bestimmten Typs bekannt.

Zur Lösung der Aufgabe der vorliegenden Erfindung wird ferner eine Vorrichtung zum Justieren einer Grundeinstellung eines Kraftfahrzeugscheinwerfers der eingangs genannten Art vorgeschlagen, die Mittel zur Ausführung des erfindungsgemäßen Verfahrens aufweist.

Diese Mittel umfassen insbesondere eine Bilderfassungs- und Bilderverarbeitungseinrichtung zum Erfassen und Ermitteln der Positionen der Helldunkelgrenze auf der vor dem Kraftfahrzeug angeordneten Messfläche während der Messungen. Als Bilderfassungseinrichtung kann bspw. eine in dem Kraftfahrzeug für beliebige Assistenzsysteme sowieso vorhandene Kamera genutzt werden. Die Bildverarbeitungseinrichtung wandelt die erfassten Abbilder der Fahrbahn vor dem Kraftfahrzeug in entsprechende elektrische Signale zur Weiterarbeitung um. Die Bildverarbeitungseinrichtung ist ein Rechengerät, insbesondere ein Mikroprozessor, auf dem eine geeignete Software abläuft. Die Bildverarbeitungseinrichtung kann integraler Bestandteil der Kamera sein. Die Software der Bildverarbeitungseinrichtung ist vorzugsweise dahingehend erweitert, dass sie aus dem von der Kamera erfassten Abbild des Bereichs vor dem Kraftfahrzeug die Position der Helldunkelgrenze detektieren und Ermitteln kann.

Ferner umfasst die Vorrichtung Mittel zum Schwenken des Lichtbündels um einen vorgegebenen Schwenkwinkel in eine Richtung im Wesentlichen senkrecht zur Erfassten Helldunkelgrenze. Diese Mittel sind bspw. als Elektromotoren, insbesondere als Schrittmotoren, ausgebildet, durch die das Lichtbündel des Scheinwerfers in horizontaler Richtung (bspw. zur Realisierung einer Kurvenlichtfunktion) oder in vertikaler Richtung (z.B. zur Realisierung einer Leuchtweiteregelung) ausgebildet. Die Mittel zum Schwenken des Lichtbündels können an beliebige Komponenten des Scheinwerfers, vorzugsweise an ein Lichtmodul des Scheinwerfers angreifen. Das Lichtmodul umfasst mindestens eine Lichtquelle zum Aussenden von Licht (z.B. eine Glühlampe, eine Gasentladungslampe, oder mindestens eine Halbleiterlichtquelle, insbesondere mindestens eine Leuchtdiode), mindestens eine Primäroptik zum Bündeln des ausgesandten Lichts (z.B. mindestens einen Reflektor oder mindestens eine Vorsatzoptik), wahlweise mindestens eine Sekundäroptik (z.B. mindestens eine Projektionslinse) zum Abbilden des gebündelten Lichts auf der Fahrbahn vor dem Kraftfahrzeug zur Erzeugung einer gewünschten Lichtverteilung und wahlweise eine zwischen der Primäroptik und der Sekundäroptik angeordnete Blendenanordnung zur Erzeugung einer zumindest teilweise abgeblendeten Lichtverteilung.

Schließlich umfasst die erfindungsgemäße Vorrichtung auch eine Auswerteeinheit, bspw. in Form eines Rechengeräts, insbesondere eines Mikroprozessors, auf dem eine Software abläuft, die unter anderem anhand trigonometrischer Funktionen aus den Ergebnissen der Messungen der Positionen der Helldunkelgrenzen und aus anderen bekannten Parametern einen Korrekturwinkel zum Justieren der Grundeinstellung des Kraftfahrzeugscheinwerfers berechnet. Die Auswerteeinheit bzw. deren Software kann Bestandteil eines sowieso vorhandenen Steuergeräts für den Scheinwerfer sein. Entsprechendes gilt auch für die Bildverarbeitungseinrichtung.

Weitere Merkmale und Vorteile der vorliegenden Erfindung werden nachfolgend anhand der Figuren näher erläutert. Dabei kann die vorliegende Erfindung die beschriebenen Merkmale entweder einzeln oder in beliebiger Kombination miteinander umfassten. Es zeigen:

Figur 1     ein Kraftfahrzeug in einer Frontalansicht sowie in einer Seitenansicht;

Figur 2     ein Kraftfahrzeug in einer Draufsicht;

Figur 3     einen mit einer Teilfernlichtverteilung ausgeleuchteten Bereich vor einem Kraftfahrzeug;

Figur 4     einen in einem Abstand zu dem Kraftfahrzeug angeordneten Messschirm mit einer darauf abgebildeten Teilfernlichtverteilung;

Figur 5     eine erfindungsgemäße Vorrichtung zum Justieren einer Grundeinstellung eines Kraftfahrzeugscheinwerfers;

Figur 6     eine Sicht, die ein Bildverarbeitungssystem des Kraftfahrzeugs im Rahmen der Realisierung der vorliegenden Erfindung hat;

Figur 7     eine Draufsicht auf einen Bereich vor dem Kraftfahrzeug mit beispielhaft eingezeichneten Hilfslinien und einem senkrecht zu einer Längsachse einer Bilderfassungseinrichtung und senkrecht zur Fahrbahn angeordneten Messschirm;

Figur 8     eine der Ansicht aus Figur 7 entsprechende Draufsicht auf die Fahrbahn, allerdings mit einer schräg zur Längsachse der Bilderfassungseinrichtung angeordneten Messfläche;

Figur 9     eine der Ansicht aus Figur 7 entsprechende Draufsicht auf die Fahrbahn vor dem Kraftfahrzeug, wobei als Messfläche die Fahrbahn vor dem Kraftfahrzeug dient;

Figur 10     eine der Ansicht aus Figur 9 entsprechende Seitenansicht des Bereichs vor dem Kraftfahrzeug mit verschiedenen beispielhaft eingezeichneten Hilfslinien; und

Figur 11     eine virtuelle, senkrecht zur Fahrbahn und senkrecht zur Längsachse der Bilderfassungseinrichtung angeordnete Messfläche für das Ausführungsbeispiel der Figuren 9 und 10.

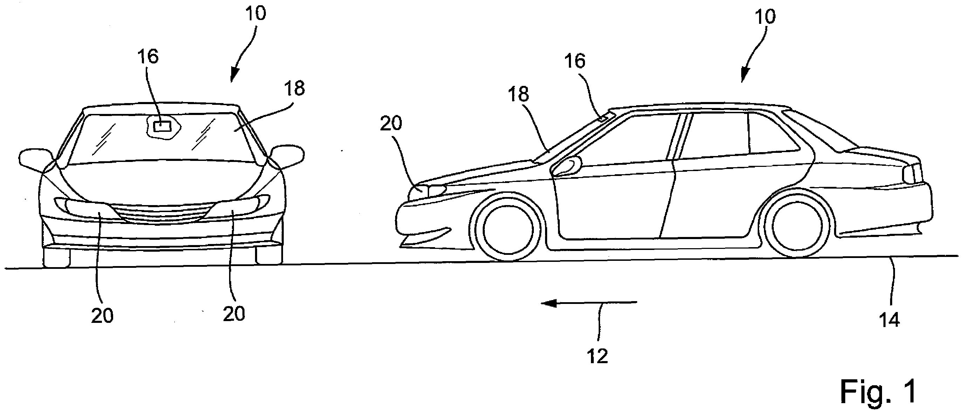

In Figur 1 ist ein Kraftfahrzeug 10 zum Einen in einer Ansicht von vorne und zum Anderen in einer Seitenansicht dargestellt. Das Kraftfahrzeug 10 fährt in Fahrtrichtung 12 auf einer Fahrbahn 14. Das Kraftfahrzeug 10 weist eine Bilderfassungseinrichtung 16 auf die in dem dargestellten Ausführungsbeispiel hinter einer Windschutzscheibe 18 des Fahrzeugs 10, insbesondere zwischen einen im Fahrzeuginneren angeordneten Rückspiegel und der Windschutzscheibe 18, angeordnet ist. Selbstverständlich kann die Bilderfassungseinrichtung 16 auch an einer beliebig anderen Stelle im Kraftfahrzeug 10 angeordnet sein, solange ihr Erfassungsbereich einen Bereich vor dem Kraftfahrzeug 10 umfasst. Die Bilderfassungseinrichtung 16 ist insbesondere als eine Kamera ausgebildet, die ein Abbild eines Bereichs vor dem Kraftfahrzeug 10 erfasst. Selbstverständlich kann die Bilderfassungseinrichtung 16 auch als ein beliebig anderer geeigneter Sensor zum Erfassen des Bereichs vor dem Fahrzeug 10 ausgebildet sein. Die Kamera 16 kann in dem Kraftfahrzeug 10 zur Realisierung beliebiger Assistenzfunktionen vorgesehen sein, bspw. zur Realisierung eines Spurhalteassistenten, einer Verkehrszeichenerkennung, eines Fernlichtassistenten oder einer Teilfernlichtfunktion.

Ferner sind im Frontbereich des Kraftfahrzeugs 10 Scheinwerfer 20 angeordnet. Die Scheinwerfer 20 weisen ein Scheinwerfergehäuse aus Kunststoff auf, das in einer Lichtaustrittsrichtung eine mit einer transparenten Abdeckscheibe verschlossene Austrittsöffnung aufweist. Im Inneren des Scheinwerfergehäuses ist mindestens ein Lichtmodul zur Erzeugung einer gewünschten Lichtverteilung vor dem Kraftfahrzeug 10 angeordnet. Das Lichtmodul umfasst eine Lichtquelle zum Aussenden von Licht, eine Primäroptik zum Bündeln des ausgesandten Lichts, wahlweise eine Sekundäroptik zum Abbilden des gebündelten Lichts auf der Fahrbahn 14 vor dem Kraftfahrzeug 10 und zur Realisierung der gewünschten Lichtverteilung, sowie ebenfalls wahlweise eine zwischen der Primäroptik und der Sekundäroptik angeordnete Blendenanordnung, um die resultierende Lichtverteilung abzublenden. Die Blendenanordnung blendet definierte Bereiche in der Lichtverteilung ab, so dass sich im Übergangsbereich vom abgeblendeten Bereich zum beleuchteten Bereich eine Helldunkelgrenze vor dem Fahrzeug bildet. Die Helldunkelgrenze verläuft bei einem Abblendlicht oder einem Nebellicht im Wesentlichen horizontal; ein Teilfernlicht oder Schlechtwetterlicht weist dazu noch vertikale Helldunkelgrenzen auf. Das Lichtmodul kann zur Erzeugung einer beliebigen Lichtverteilung, bspw. eines Abblendlichts, eines Stadtlichts, eines Landstraßenlichts, eines Autobahnlichts, eines Fernlichts, eines Schlechtwetterlichts, eines Kurvenlichts, eines Teilfernlichts oder einer beliebig anderen adaptiven Lichtverteilung, ausgebildet sein. Ferner kann in dem Scheinwerfergehäuse außerdem mindestens einen Lichtmodul auch mindestens ein Leuchtemodul angeordnet sein, um bspw. ein Blinklicht, ein Positionslicht, ein Tagfahrlicht oder eine beliebig andere Leuchtenfunktion zu realisieren.

Der Scheinwerfer 20 sendet ein Lichtbündel aus, das in horizontaler Richtung und/oder vertikaler Richtung verschwenkbar ist. Dazu ist bspw. ein Lichtmodul des Scheinwerfers 20 beweglich, insbesondere drehachsenverschwenkbar, in dem Scheinwerfergehäuse angeordnet. Zum Bewegen des Lichtmoduls und damit zum Verschwenken des von dem Scheinwerfer 20 ausgesandten Lichtbündels weist der Scheinwerfer 20 ferner geeignete Schwenkmittel auf, die bspw. als ein Elektromotor, insbesondere als ein Schrittmotor, ausgebildet sind. Durch Verschwenken des Lichtbündels in horizontaler Richtung kann eine dynamische Kurvenlichtfunktion und/oder eine Teilfernlichtfunktion des Scheinwerfers 20 realisiert werden. Durch Verschwenken des Lichtbündels in vertikaler Richtung kann die Leuchtweite des von dem Scheinwerfer 20 ausgesandten Lichtbündels variiert werden, entweder manuell vom Fahrzeuginneren aus oder automatisch in Abhängigkeit von einer Neigung der Kraftfahrzeugkarosserie um eine Fahrzeugquerachse.

Die Verstellung des Lichtbündels in horizontaler und/oder vertikaler Richtung erfolgt ausschließlich gesteuert, d.h. es fehlt an einer Rückmeldung bzgl. der tatsächlichen Istposition des Lichtbündels und der Möglichkeit einer automatischen Korrektur des Lichtbündels auf einen Sollwert. Das lediglich gesteuerte Anfahren einer bestimmten Verschwenkposition des Lichtbündels in horizontaler und/oder vertikaler Richtung macht es erforderlich, dass die Scheinwerfer 20 möglichst genau auf eine Grundeinstellung justiert sind. Die vorliegende Erfindung betrifft ein einfaches, kostengünstiges aber dennoch hochgenaues Justieren der Grundeinstellung der Fahrzeugscheinwerfer 20. Dies erfolgt anhand einer horizontalen und/oder vertikalen Helldunkelgrenze des von den Scheinwerfern 20 ausgesandten Lichtbündels. D.h., die Scheinwerfer 20 müssen zur Realisierung der vorliegenden Erfindung ein Lichtbündel mit einer horizontalen und/oder vertikalen Helldunkelgrenze aussenden, damit das vorgeschlagene automatische Justieren der Grundeinstellung der Scheinwerfer 20 gemäß der vorliegenden Erfindung realisiert werden kann.

Die vorliegende Erfindung kann zum Justieren einer vertikalen Grundeinstellung des Scheinwerfers 20 eingesetzt werden. Dabei wird vorzugsweise eine horizontale Helldunkelgrenze, wie sie beispielsweise eine Abblendlichtverteilung, eine Stadtlichtverteilung oder eine Landstraßenlichtverteilung aufweist, herangezogen. Nachfolgend wird die vorliegende Erfindung jedoch beispielhaft am Justieren einer horizontalen Grundeinstellung eines Scheinwerfers 20 näher erläutert. Dazu wird vorzugsweise eine vertikale Helldunkelgrenze eines von einem zu justierenden Scheinwerfer 20 ausgesandten Teilfernlichts herangezogen. Die vorliegende Erfindung ist jedoch keinesfalls auf das Justieren einer horizontalen Grundeinstellung anhand der vertikalen Helldunkelgrenze eines Teilfernlichts beschränkt.

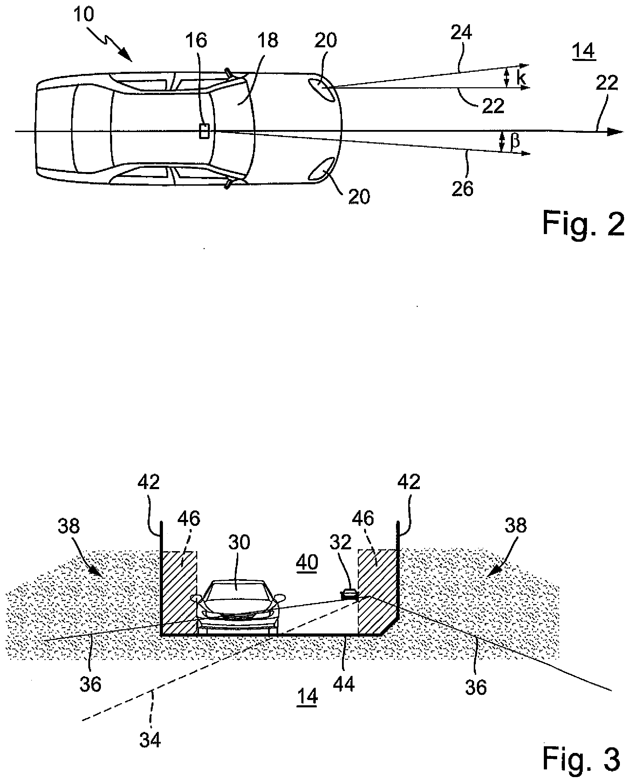

In Figur 2 ist das Kraftfahrzeug 10 in einer Draufsicht dargestellt. Eine Längsachse des Fahrzeugs 10 ist mit dem Bezugszeichen 22 bezeichnet. Eine Längsachse des in eine entsprechende Einbauöffnung der Fahrzeugkarosserie eingebauten Scheinwerfers 20 ist mit dem Bezugszeichen 24 bezeichnet. Eine Längsachse der Bilderfassungseinrichtung 16 des Fahrzeugs 10 ist mit dem Bezugszeichen 26 bezeichnet. Aufgrund von Toleranzen bei der Fertigung und dem Einbau der Bilderfassungseinrichtung 16 und der Scheinwerfer 20 in das Kraftfahrzeug 10 verlaufen die Scheinwerferlängsachse 24 und die Kameralängsachse 26 regelmäßig nicht in der gewünschten Weise. Insbesondere ist die Kamera 16 in keiner Weise relativ zu den Scheinwerfern 20 justiert. Deshalb wird im Stand der Technik sowohl die Scheinwerferlängsachse 24 als auch die Kameralängsachse 26 bezüglich der Fahrzeuglängsachse 22 justiert und die justierte Position der Scheinwerferlängsachse 24 und der Kameralängsachse 26 als Grundeinstellung der Scheinwerfer 20 bzw. der Kamera 16 herangezogen. Das eigentliche Ziel, die Scheinwerfer 20 relativ zu der Kamera 16 zu justieren, kann bei dem aus dem Stand der Technik bekannten Verfahren jedoch nur unter großem Aufwand und mit relativ großen Toleranzen erreicht werden. Hier kann die vorliegende Erfindung Abhilfe schaffen.

Gemäß der vorliegenden Erfindung erfolgt die Referenzierung der Scheinwerfer 20 automatisch mit der in dem Kraftfahrzeug 10 installierten Bilderfassungseinrichtung 16. Die vorliegende Erfindung erlaubt ein Justieren der Grundeinstellung der Scheinwerfer 20 ohne zusätzliche Hilfsvorrichtungen für die Grundeinstellung bzw. Kalibrierung der Scheinwerfer 20. Gemäß dem dargestellten Ausführungsbeispiel wird ein Algorithmus zur automatischen horizontalen Referenzierung bzw. Kalibrierung der Scheinwerfer 20 mit einer im Kraftfahrzeug 10 installierten Bilderfassungseinrichtung 16 vorgeschlagen. Für den Kalibrierungsalgorithmus wird keine zusätzliche Referenz- oder Justagemarkierung benötigt. Die Erfindung ermöglicht gemäß dem dargestellten Ausführungsbeispiel eine besonders genaue Ausrichtung der vertikalen Helldunkelgrenze für die Funktion eines Teilfernlichts. Damit kann eine Blendung anderer, insbesondere entgegenkommender oder vorausfahrender Verkehrsteilnehmer, verhindert werden. Besonders vorteilhaft ist es, dass dadurch auch die Ausleuchtung des Bereichs vor dem Fahrzeug 10 deutlich verbessert werden kann, was einen erheblichen Sicherheitsgewinn darstellt. Durch die automatische Kalibrierung der beiden Systeme (Scheinwerfer 20 und Bilderfassung und -verarbeitung 16) zueinander, werden die Toleranzen des Gesamtsystems verringert, so dass ein Sicherheitsbereich zwischen der Position der vertikalen Helldunkelgrenze und der Position eines detektierten entgegenkommenden oder vorausfahrenden Verkehrsteilnehmers kleiner und die Ausleuchtung der Verkehrssituation vor dem Fahrzeug 10 im Teilfernlicht verbessert werden kann.

In Figur 3 ist beispielhaft ein Abbild eines Bereichs vor einem Kraftfahrzeug 10 dargestellt, dessen Scheinwerfer 20 eine Teilfernlichtverteilung erzeugen. Die Ansicht der Figur 3 entspricht im Wesentlichen dem, was der Fahrer des Fahrzeugs 10 durch seine Windschutzscheibe 18 hindurch vor seinem Fahrzeug 10 sieht. Das dargestellte Beispiel betrifft Rechtsverkehr, wobei das Fahrzeug 10 auf einer rechten Spur auf der Fahrbahn 14 fährt. Auf einer linken Spur der Fahrbahn 14 fahren entgegenkommende Fahrzeuge 30, 32. Die beiden Fahrspuren der Fahrbahn 14 sind in dem dargestellten Beispiel durch eine unterbrochene Linie 34 zueinander abgegrenzt. Die Ränder der Fahrbahn 14 sind mit den Bezugszeichen 36 bezeichnet. Der Bereich vor dem Kraftfahrzeug 10 wird mit einer sogenannten Teilfernlichtverteilung (auch als maskiertes Fernlicht bezeichnet) ausgeleuchtet, die mit dem Bezugszeichen 38 bezeichnet ist. Dabei wird der Bereich vor dem Fahrzeug mit einer Fernlichtverteilung ausgeleuchtet, wobei entgegenkommende Verkehrsteilnehmer 30, 32 und vorzugsweise auch andere Verkehrsteilnehmer, wie beispielsweise vorausfahrende Fahrzeuge sowie Personen und Fahrzeuge am Fahrbahnrand, von der Bilderfassungs- und -verarbeitungseinrichtung 16 erfasst und ihre Positionen ermittelt werden, so dass die Bereiche des Fernlichts, wo sich detektierte Verkehrsteilnehmer 30, 32 befinden, aus dem Fernlicht ausgeblendet werden können.

Der vom Fernlicht ausgeblendete Bereich ist mit dem Bezugszeichen 40 bezeichnet. Der Bereich 40 wird seitlich durch im Wesentlichen vertikal verlaufende Helldunkelgrenzen 42 und nach unten hin durch eine im Wesentlichen horizontale Helldunkelgrenze 44 begrenzt. Dabei kann die horizontale Helldunkelgrenze 44 mit einer horizontalen Helldunkelgrenze einer abgeblendeten Lichtverteilung, bspw. einer Abblendlichtverteilung, übereinstimmen. Da die Justage der Scheinwerfer 20 relativ zu dem Bildverarbeitungssystem 16 lediglich mit gewissen Toleranzen möglich ist, können die seitlichen, vertikalen Helldunkelgrenzen 42 nicht bis unmittelbar an die detektierten Verkehrsteilnehmer 30, 32 herangeführt werden; vielmehr muss ein Sicherheitsbereich 46 der vertikalen Helldunkelgrenzen 42 zu den detektierten Verkehrsteilnehmern 30, 32 eingehalten werden. Vorzugsweise wird das Teilfernlicht 38 derart realisiert, dass einer der Scheinwerfer 20 des Fahrzeugs 10 eine Lichtverteilung mit einer der vertikalen Helldunkelgrenzen 42 erzeugt und der andere Scheinwerfer 20 eine andere Lichtverteilung mit der anderen vertikalen Helldunkelgrenze 42. Durch eine Überlagerung der Lichtverteilungen der beiden Scheinwerfer 20 ergibt sich die in Figur 3 dargestellte Teilfernlichtverteilung 38 mit dem durch die beiden vertikalen Helldunkelgrenzen 42 seitlich begrenzten abgeschatteten Bereich 40.

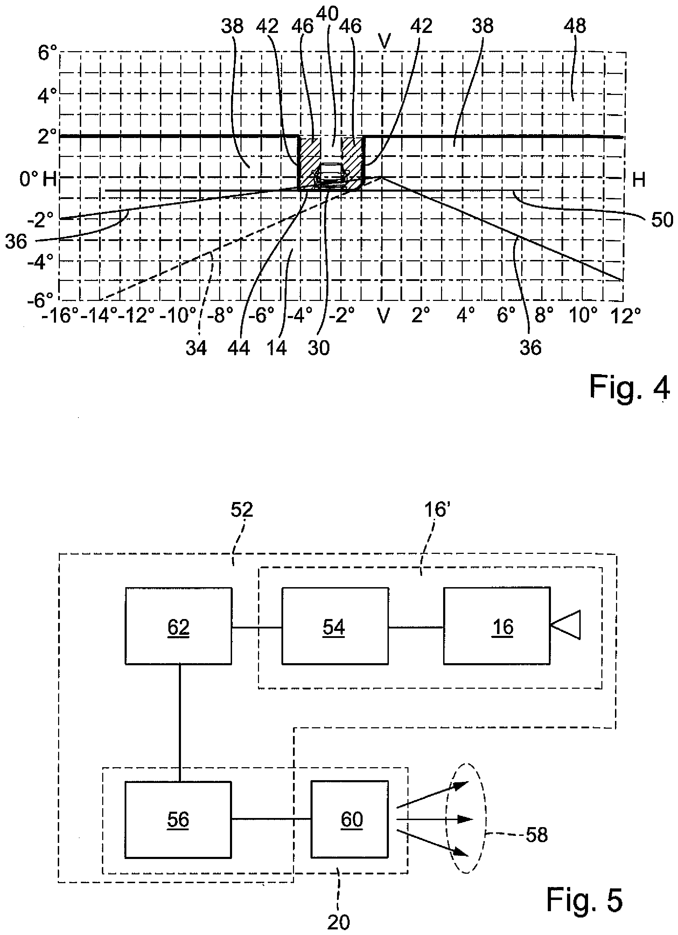

In Figur 4 ist eine andere Teilfernlichtverteilung 38 beispielhaft dargestellt, wie sie sich auf einem in einem Abstand zu dem Fahrzeug 10, beispielsweise in einem Abstand von 25m, angeordneten Messschirm oder einer entsprechenden Messfläche 48 ergibt. Die Messfläche 48 verfügt über eine Horizontale HH und eine Vertikale VV. Eine unterhalb der Horizontalen HH, bei etwa -0,7° vertikal angeordnete Linie 50 repräsentiert eine horizontale Helldunkelgrenze eines Abblendlichts, die mit der horizontalen Helldunkelgrenze 44 des abgeschatteten Bereichs 40 der Teilfernlichtverteilung 38 zusammenfällt.

In Figur 5 ist eine erfindungsgemäße Vorrichtung zum Justieren der Grundeinstellung der Scheinwerfer 20 in ihrer Gesamtheit mit dem Bezugzeichen 52 bezeichnet. Die Vorrichtung 52 umfasst die Bilderfassungseinrichtung 16, sowie eine Bildverarbeitungseinrichtung 54. Die Bildverarbeitungseinrichtung 54 kann integraler Bestandteil einer kombinierten Bilderfassungs- und -verarbeitungseinrichtung 16' sein. Die Bildverarbeitungseinrichtung 54 dient insbesondere dazu, das von der Kamera 16 aufgenommene Abbild des Bereichs vor dem Fahrzeug 10 in entsprechende elektrische Signale zur Weiterverarbeitung umzuwandeln. Ferner umfasst die Vorrichtung 52 Mittel 56 zum Schwenken des von dem zu justierenden Scheinwerfer 20 ausgesandten Lichtbündels 58. Bei den Mitteln 56 kann es sich bspw. um einen Elektromotor, vorzugsweise um eine Schrittmotor handeln, der die Position eines Lichtmoduls 60 des Scheinwerfers 20 zum Verschwenken des Lichtbündels 58 relativ zum Scheinwerfergehäuse bewegt. In dem beschriebenen Ausführungsbeispiel, bei dem die horizontale Grundeinstellung der Scheinwerfer 20 anhand der vertikalen Helldunkelgrenzen 42 justiert werden soll, bewirken die Schwenkmittel 56 ein Verschwenken des Lichtmoduls 60 in einer im Wesentlichen horizontalen Richtung. Die Schwenkmittel 56 sind in dem Scheinwerfer 20 zur Realisierung der Teilfernlichtfunktion, insbesondere zum Bewegen der vertikalen Helldunkelgrenzen 42 in horizontaler Richtung, und/oder zur Realisierung einer dynamischen Kurvenlichtfunktion sowieso vorhanden.

Die Vorrichtung 52 weist schließlich auch eine Auswerteeinheit 62 auf, die einen Korrekturwinkel zum Justieren der horizontalen Grundeinstellung des Scheinwerfers 20 in Abhängigkeit von den während der Messungen ermittelten Position der durch den Scheinwerfer 20 erzeugten vertikalen Helldunkelgrenze 42 sowie in Abhängigkeit weiterer bekannter Parameter ermittelt. Die Auswerteeinheit 62 steuert vorzugsweise auch die Bilderfassung- und - verarbeitungseinrichtung 16, 54 bzw. 16' zur Durchführung der Erfassung und Ermittlung der Position der vertikalen Helldunkelgrenze 42 während der Messungen an. Ferner steuert die Auswerteeinheit 62 vorzugsweise die Stellmittel 56 des Scheinwerfers 20 an, damit die horizontale Position des Lichtbündels 58 und damit auch die horizontale Position der vertikalen Helldunkelgrenze 42 zwischen zwei Messungen verändert wird. Die Auswerteeinheit 62 stellt somit eine zentrale Steuereinrichtung zur Realisierung des erfindungsgemäßen Verfahrens zum Justieren der horizontalen Grundeinstellung des Kraftfahrzeugscheinwerfers 20 dar. Zur Erfüllung der Steuerungs- und Auswertefunktionalität umfasst die Auswerteeinheit 62 vorzugsweise ein Rechengerät, insbesondere in Form eines Mikroprozessors, auf dem ein entsprechendes Computerprogramm zur Realisierung des erfindungsgemäßen Verfahrens abläuft.

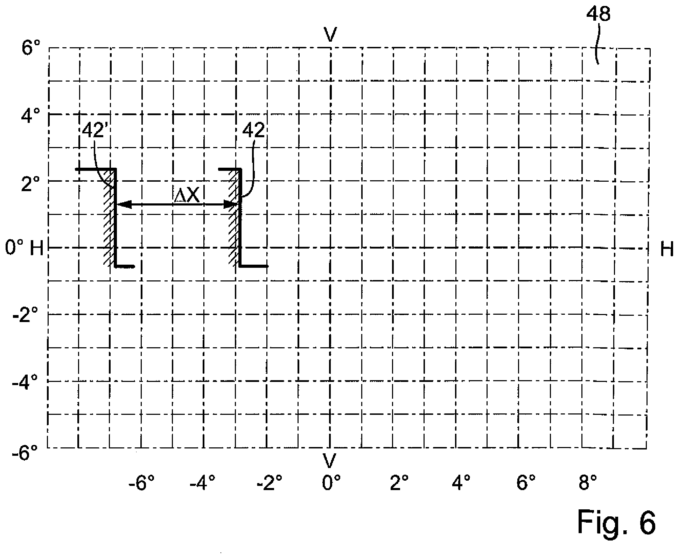

In Figur 6 ist die Sicht des Bildverarbeitungssystems 16, 54 bzw. 16' während der Ausführung des erfindungsgemäßen Verfahrens dargestellt. Ein Scheinwerfer 20, dessen horizontale Grundeinstellung justiert werden soll, erzeugt - wie gesagt - eine vertikale Helldunkelgrenze 42. Deren Position auf der vor dem Fahrzeug angeordneten Messfläche 48 wird im Rahmen einer ersten Messung ermittelt. Anschließend wird das Lichtbündel 58 und damit auch die vertikale Helldunkelgrenze 42 durch die Schwenkmittel 56 in horizontaler Richtung um einen vorgegebenen Winkel verschwenkt. Eine neue Position der Helldunkelgrenze ist mit dem Bezugszeichen 42' bezeichnet. Anhand der gemessenen Positionen der Helldunkelgrenze 42, 42' kann dann von der Auswerteeinheit 62 der Korrekturwinkel k zum Justieren der horizontalen Grundeinstellung des Scheinwerfers 20 ermittelt werden, wobei die Ermittlung des Korrekturwinkels k anhand von trigonometrischen Funktionen und unter Berücksichtigung bekannter Parameter von Scheinwerfer 20 bzw. dessen Lichtquelle und Bilderfassungseinrichtung 16 in dem Kraftfahrzeug 10 berücksichtigt werden. Die dem erfindungsgemäßen Verfahren zugrundeliegenden Algorithmen werden nachfolgend anhand verschiedener Ausführungsbeispiele näher erläutert.

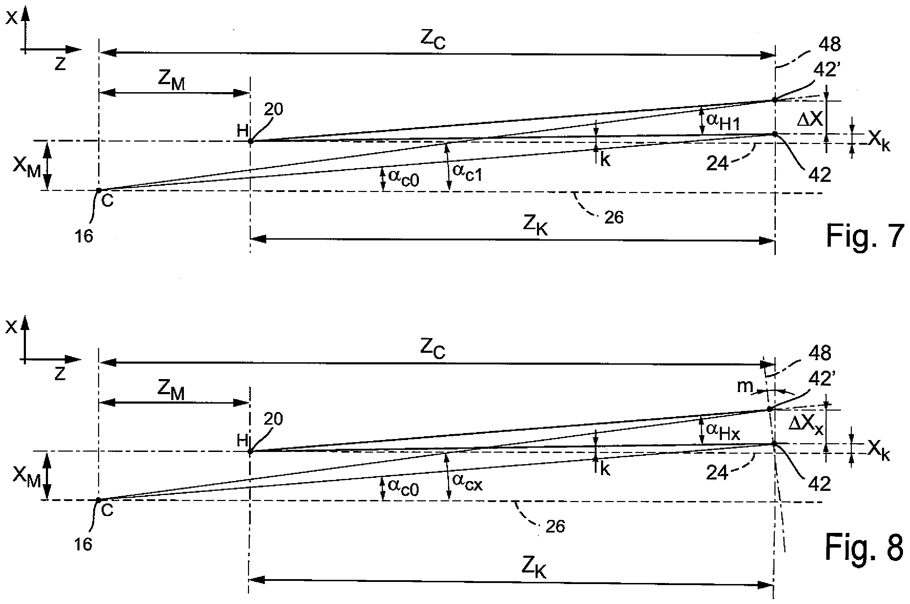

Figur 7 zeigt eine Darstellung einer ersten Messanordnung zum automatischen Justieren der Grundeinstellung des Scheinwerfers 20 in einer Draufsicht. Der zu justierende Scheinwerfer 20 bzw. dessen Lichtquelle ist mit H (für Headlight) und die Bilderfassungseinrichtung 16 mit C (für Camera) bezeichnet. In dieser ersten Messanordnung wird eine senkrechte Anordnung der Messfläche 48 sowohl zur Fahrbahn 14 als auch zur Kraftfahrzeuglängsachse 22 angenommen, was einen vereinfachten Idealfall darstellt. Auf der Messfläche 48 wird die vom Scheinwerfer 20 erzeugte vertikale Helldunkelgrenze 42 abgebildet, sodass die Bilderfassungseinrichtung 16 die Position der Helldunkelgrenze 42 genau erfassen kann.

Das erfindungsgemäße Verfahren sieht für die erste Messanordnung folgende Schritte zur Ermittlung des Korrekturwinkels k vor:

a) Zunächst wird eine Position der Helldunkelgrenze 42 auf der vor dem Kraftfahrzeug 10 angeordneten Messfläche 48 während einer ersten Messung durch die Bilderfassungseinrichtung 16 erfasst. Die Signale der Bilderfassungseinrichtung 16 werden an die Bildverarbeitungseinrichtung 54 weitergeleitet. Dabei wird ein Winkel $\alpha_{C0}$ zwischen einer Verbindungsgeraden von der Bilderfassungseinrichtung 16 erfassten Helldunkelgrenze 42 und der Kameralängsachse 26 ermittelt und gespeichert.

b) Anschließend wird das Lichtbündel 58 manuell oder automatisch um den vorgegebenen Schwenkwinkel $\alpha_{H1}$ senkrecht zum Verlauf der erfassten Helldunkelgrenze 42, hier also horizontal, geschwenkt. Dies kann bspw. durch Verschwenken des Lichtmoduls 60 erfolgen.

c) Dadurch ergibt sich eine neue Position der Helldunkelgrenze 42' auf der Messfläche 48. Während einer weiteren Messung durch die Bilderfassungseinrichtung 16 wird ein weiterer Winkel $\alpha_{C1}$ zwischen einer Verbindungsgeraden von der Bilderfassungseinrichtung 16 erfassten, neupositionierten Helldunkelgrenze 42' und der Kameralängsachse 26 ermittelt und gespeichert.

d) Anschließend kann der Korrekturwinkel k zum Justieren der Grundeinstellung des Scheinwerfers 20 aus den Ergebnissen der Messungen (Winkel $\alpha_{C0}$ und $\alpha_{C1}$) und anderen bekannten Parametern des Kamera-Scheinwerfer-Systems im Kraftfahrzeug 10 in der Auswerteeinheit 62 ermittelt werden. Die bekannten Parameter sind neben dem vorgesehenen Schwenkwinkel $\alpha_{H1}$ des Lichtbündels 58 zusätzlich eine Z-Komponente $Z_M$ und eine X-Komponente $X_M$ eines Abstands M der Bilderfassungseinrichtung 16 zur Lichtquelle des Scheinwerfers 20.

Zur Verdeutlichung wird nachfolgend der mathematische Algorithmus zum Ermitteln des Korrekturwinkels k anhand der Darstellung in Figur 7 näher erläutert. Durch die genau senkrechte Anordnung der Messfläche 48 zur Kraftfahrzeuglängsachse 22 bilden sich rechtwinklige Dreiecke, deren Winkel und Seitenlängen mit Hilfe von trigonometrischen Formeln leicht berechnet werden können. Ziel ist es, eine Formel für den Korrekturwinkel k zu finden, in der ausschließlich im Verfahren bekannte Parameter ($Z_M$, $X_M$, $\alpha_{H1}$) oder durch das Verfahren ermittelte Parameter ($\alpha_{C0}$; $\alpha_{C1}$) vorkommen.

Ausgehend von der Position C (Position der Bilderfassungseinrichtung 16) ergibt sich rein mathematisch aus dem Abstand $X_M$ zwischen der Kamera 16 und dem Scheinwerfer 20 in X-Richtung, dem Abstand $Z_C$ zwischen der Kamera 16 und der Messfläche 48 in Z-Richtung und dem Abstand $X_K$ zwischen der Scheinwerferlängsachse 24 und der Position der im Rahmen der erstem Messung ermittelten Helldunkelgrenze 42 in X-Richtung, sowie dem in Schritt a) ermittelten Winkel $\alpha_{C0}$ folgende trigonometrische Beziehung:

$$(1a) \qquad \tan \alpha_{C0} = (X_M + X_k) / Z_C$$
$$Z_C * \tan \alpha_{C0} = X_M + X_k$$

oder

Analog ergibt sich für den nach dem Schwenken ermittelten Winkel $\alpha_{C1}$ folgende trigonometrische Beziehung:

$$(1b) \qquad \tan \alpha_{C1} = (X_M + X_k + \Delta X) / Z_C$$

oder

$$Z_C * \tan \alpha_{C1} = X_M + X_k + \Delta X$$

wobei $\Delta X$ der Abstand zwischen den beiden im Rahmen der Messungen ermittelten Positionen 42; 42' der Helldunkelgrenze in X-Richtung, d.h. in horizontaler Richtung, ist.

Außerdem gilt die mathematische Beziehung:

$$(2) \qquad Z_K = Z_C - Z_M$$

Für den Abstand $X_k$ auf der Messfläche 48 kann folgende trigonometrische Beziehung aufgestellt werden:

$$(3) \qquad X_k = \tan k * Z_K$$

Wird in der Formel (3) $Z_K$ durch die Formel (2) ersetzt, ergibt sich:

$$(4) \qquad X_k = \tan k \ast (Z_C - Z_M)$$

Außerdem gelten ausgehend von der Position H (Position der Lichtquelle des Scheinwerfers 20) folgende trigonometrische Beziehungen:

$$(5) \qquad \tan (k + \alpha_{H1}) = (X_K + \Delta X) / Z_K$$

Wird in der Formel (5) $Z_K$ durch die Formel (2) ersetzt, ergibt sich:

$$(6) \qquad \tan (k + \alpha_{H1}) = (X_K + \Delta X) / (Z_C - Z_M)$$
$$\tan (k + \alpha_{H1}) \ast (Z_C - Z_M) = X_K + \Delta X$$

oder
Der Abstand $X_K$ auf der Messfläche 48 ergibt sich dann durch Umstellen der Formel (6):

$$(7) \qquad X_K = \tan (k + \alpha_{H1}) \ast (Z_C - Z_M) - \Delta X$$

Nach dem Schwenken des Lichtbündels 58 gemäß Schritt b) gilt folgende trigonometrische Beziehung:

$$(8) \qquad Z_C \ast \tan \alpha_{C1} = X_M + \Delta X + X_k$$

Durch Einsetzen von Formel (7) in Formel (8) ergibt sich:

$$(9) \quad Z_C \ast \tan \alpha_{C1} = X_M + \Delta X + \tan (k + \alpha_{H1}) \ast (Z_C - Z_M) - \Delta X$$

oder reduziert:

$$Z_C \ast \tan \alpha_{C1} = X_M + \tan (k + \alpha_{H1}) \ast (Z_C - Z_M)$$

Durch Einsetzen von Formel (4) in Formel (1a) ergibt sich:

$$(10) \qquad Z_C \ast \tan \alpha_{C0} = X_M + (Z_C - Z_M) \ast \tan k$$

Analog dazu ergibt sich dazu aus Formel (4) und Formel (1b):

$$(11) \qquad Z_C \ast \tan \alpha_{C0} = X_M + (Z_C - Z_M) \ast \tan (k + \alpha_{H1})$$

Durch einen Vergleich des Abstandes $X_K$ zum Abstand $Z_K$ fällt in einem realistischen Fall der Korrekturwinkel k immer sehr klein aus. Daher können für klein angenommene Winkel k die Formeln (10) und (11) vereinfacht werden:

$$(12) \qquad Z_C \ast \tan \alpha_{C0} = X_M + (Z_C - Z_M) \ast k$$

$$(13) \qquad Z_C \ast \tan \alpha_{C0} = X_M + (Z_C - Z_M) \ast (k + \alpha_{H1})$$

Durch Umstellen der Formeln (12) und (13) ergibt sich dann:

$$(14) \qquad 0 = X_M + Z_C * k - Z_M * k - Z_C * \tan \alpha_{C0}$$

$$(15) \qquad 0 = X_M + Z_C * k - Z_M * k + Z_C * \alpha_{H1} \; Z_M * \alpha_{H1} - Z_C * \tan \alpha_{C1}$$

Jetzt können die Formeln (14) und (15) gleichgesetzt werden.

Es ergibt sich:

$$(16) \quad X_M + Z_C * k - Z_M * k - Z_C * \tan \alpha_{C0} =$$
$$X_M + Z_C * k - Z_M * k + Z_C * \alpha_{H1} \; Z_M * \alpha_{H1} - Z_C * \tan \alpha_{C1}$$

Durch Zusammenfassen der Formel (16) ergibt sich dann:

$$(17) \qquad - Z_C * \tan \alpha_{C0} = Z_C * \alpha_{H1} - Z_M * \alpha_{H1} - Z_C * \tan \alpha_{C1}$$

oder

$$(18) \qquad Z_M * \alpha_{H1} = Z_C * \alpha_{H1} + Z_C * \tan \alpha_{C0} - Z_C * \tan \alpha_{C1}$$

Durch Ausklammern von $Z_C$ wird aus Formel (18):

$$(19) \qquad Z_M * \alpha_{H1} = Z_C (\alpha_{H1} + \tan \alpha_{C0} - \tan \alpha_{C1})$$

Zur Berechnung von $Z_C$ ergibt sich durch Umstellung der Formel (19) eine mathematische Beziehung, in der ausschließlich im Verfahren bekannte Parameter ($Z_M$, $\alpha_{H1}$) oder durch das Verfahren ermittelte Parameter ($\alpha_{C0}$ ; $\alpha_{C1}$) vorkommen:

$$(20) \qquad Z_C = Z_M * \alpha_{H1} \; / \; (\alpha_{H1} + \tan \alpha_{C0} - \tan \alpha_{C1})$$

Durch Umstellen der Formel (12) auf den Korrekturwinkel k ergibt sich:

$$(21) \qquad k = (Z_C * \tan \alpha_{C0} - X_M) \; / \; (Z_C - Z_M)$$

In die Formel (21) kann jetzt der Parameter $Z_C$ aus Formel (20) eingesetzt werden. Es ergibt sich dadurch letztendlich für den Korrekturwinkel k:

$$(22) \qquad k = \frac{\dfrac{Z_M \cdot a_{H1}}{\tan \alpha_{c0} + \alpha_{H1} - \tan \alpha_{C1}} \cdot \tan \alpha_{C0} - X_M}{\dfrac{Z_m \cdot a_{H1}}{\tan \alpha_{c0} + \alpha_{H1} - \tan \alpha_{C1}} - Z_M}$$

Gemäß dieser Formel kann in der Auswerteeinheit 54 der Korrekturwinkel k ermittelt werden. Anschließend kann bspw. nach jedem Einschalten des Scheinwerfers 20 der Scheinwerfer 20 bzw. das entsprechenden Lichtmodul automatisch in die Grundeinstellung justiert werden, worauf die gewünschten Lichtfunktionen, z.B. das Teilfernlicht, als Basis aufbauen können.

Figur 8 zeigt eine Darstellung einer zweiten Messanordnung zum automatischen Justieren des Scheinwerfers 20 in die Grundeinstellung in einer Draufsicht. In dieser zweiten Messanordnung ist die Messfläche 48 schräg zur Scheinwerferlängsachse 24 angenommen und stellt im Gegensatz zur ersten Messanordnung einen allgemeineren Fall dar. Die schräg angeordnete Messfläche 48 bewirkt ein Verschieben der Helldunkelgrenze 42, 42' auf der Messfläche 48 und muss deshalb im erfindungsgemäßen Verfahren berücksichtigt werden. Eine Winkelabweichung der Messfläche 48 zur Senkrechten der Kraftfahrzeuglängsachse 22 ist in Figur 8 mit m bezeichnet.

In dem erfindungsgemäßen Verfahren ist nicht vorgesehen, dass die Winkelabweichung m bekannt ist. Die Winkelabweichung m stellt also im Algorithmus des erfindungsgemäßen Verfahrens einen zunächst unbekannten Parameter dar. Das führt dazu, dass eine weitere Messung mit einem weiteren vorgegebenen Schwenkwinkel $\alpha_{C2}$ des Scheinwerfers 20 bzw. des Lichtmoduls durchgeführt werden muss, um den unbekannten Parameter m im Algorithmus mit neuen, zusätzlich bekannten oder gemessenen Parametern ersetzen zu können. Dazu müssen die Verfahrensschritte b) und c) der ersten Messanordnung mit dem neuen Schwenkwinkel $\alpha_{C2}$ wiederholt werden. Die übrigen Verfahrensschritte zur Ermittlung des Korrekturwinkels k sind mit den Verfahrensschritten aus der ersten Messanordnung identisch. In Figur 8 sind die Parameter zu den entsprechenden durchzuführenden Messungen mit dem tiefgestellten Index 'x' gekennzeichnet ($\alpha_{Cx}$ und $\alpha_{Hx}$).

In der zweiten Messanordnung wird also eine vertikale Helldunkelgrenze 42; 42', sowie in einer dritten Position (nicht dargestellt), in einer bekannten Scheinwerferstellung $\alpha_{H0}$ auf der schräg zur Scheinwerferlängsachse 24 verlaufenden Messfläche 48 erzeugt und mittels der Bilderfassungseinrichtung 16 die Helldunkelgrenze in den Positionen 42, 42' und der dritten Position ermittelt. Der Messwert $\alpha_{C0}$ (Winkel der Verbindungsgeraden von der Bilderfassungseinrichtung 16 zur erfassten Helldunkelgrenze 42 in der Ausgangsstellung) wird gespeichert. Danach wird die Helldunkelgrenze 42 zwei Mal um einen vorgegebenen Schwenkwinkel ($\alpha_{H1}$, $\alpha_{H2}$) geschwenkt. Dabei wird jedes Mal eine Messung ($\alpha_{C1}$, $\alpha_{C2}$) zur verschobenen neuen Helldunkelgrenze 42' durchgeführt. Aus den Winkeln $\alpha_{H0}$, $\alpha_{H1}$, $\alpha_{H2}$, $\alpha_{C0}$, $\alpha_{C1}$, $\alpha_{C2}$ sowie den bekannten Abständen $Z_M$ und $X_M$ kann der Korrekturwinkel k rechnerisch ermittelt werden.

Durch zusätzliche Messungen mit weiteren vorgegebenen Schwenkwinkeln des Scheinwerfers 20 bzw. durch mehrfaches Wiederholen der Verfahrensschritte b) und c) der ersten Messanordnung mit jeweils neuen Schwenkwinkeln können eventuell weitere unbekannte Parameter im Algorithmus des erfindungsgemäßen Verfahrens mit einbezogen werden, um bspw. das Verfahren weiter zu verbessern bzw. die Genauigkeit zu erhöhen.

Im Folgenden werden Formeln zur Berechnung einer Tangensfunktion für die Winkel $\alpha_{C0}$, $\alpha_{C1}$, und $\alpha_{C2}$ zwischen der Kameralängsachse 26 und der Verbindungsgeraden von der Bilderfassungseinrichtung 16 zu der erfassten Positionen 42, 42' und der dritten Position der Helldunkelgrenze angegeben. Die drei Formeln enthalten als unbekannte Parameter den Korrekturwinkel k, den Abstand $Z_C$ der Bilderfassungseinrichtung 16 zur Messfläche 48 sowie die Winkelabweichung m. Auf ein Herleiten der Formeln und ein anschließendes Ersetzen der unbekannten Parameter $Z_K$ und m in den Formeln zur Erlangung der endgültigen Formel für den Korrekturfaktor k wird verzichtet. Die drei Formeln lauten:

$$(23) \qquad \tan\alpha_{C0} = \frac{(Z_C - Z_M) + \tan(k + \alpha_{H0}) + X_M}{Z_C + m \cdot (X_M - \tan(\alpha_{C0} + k) \cdot Z_M)}$$

$$(24) \qquad \tan\alpha_{C1} = \frac{(Z_C - Z_M) + \tan(k + \alpha_{H1}) + X_M}{Z_C + m \cdot (X_M - \tan(\alpha_{C1} + k) \cdot Z_M)}$$

$$(25) \qquad \tan\alpha_{C2} = \frac{(Z_C - Z_M) + \tan(k + \alpha_{H2}) + X_M}{Z_C + m \cdot (X_M - \tan(\alpha_{C2} + k) \cdot Z_M)}$$

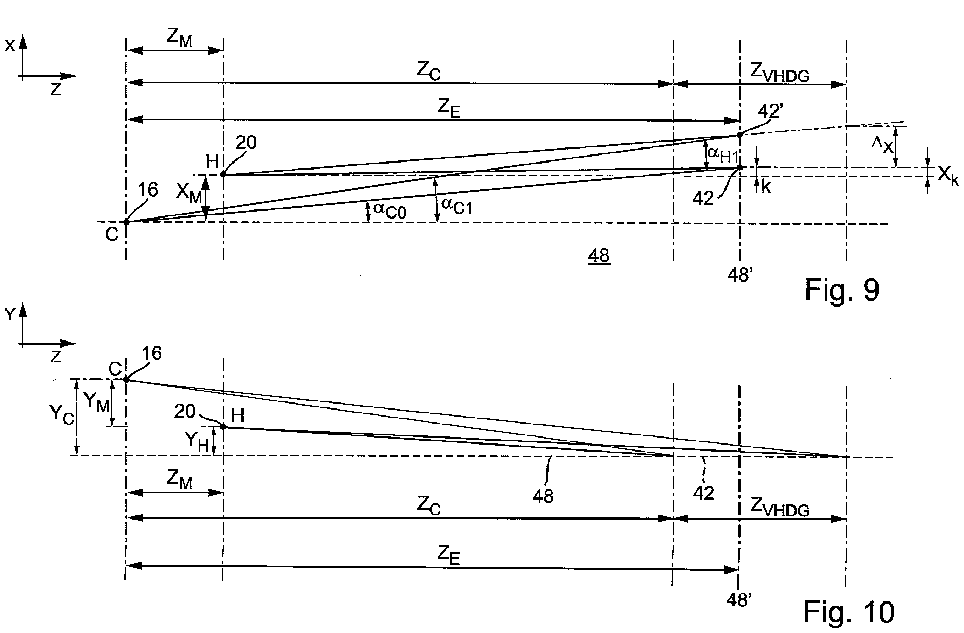

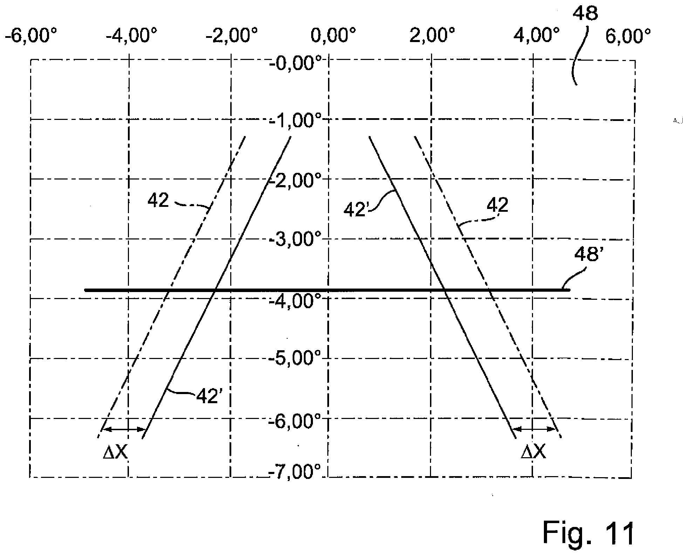

Die Figuren 9 und 10 zeigen eine dritte Messanordnung zum automatischen Justieren des Scheinwerfers 16 in die Grundeinstellung, wobei Figur 9 eine seitliche Ansicht der Messanordnung und Figur 10 die Messanordnung in einer Draufsicht zeigt. Hierbei wird eine vertikale Helldunkelgrenze 42 in einer bekannten Scheinwerferstellung $\alpha_{H0}$ auf einer horizontal und parallel zur Kraftfahrzeuglängsachse 22 verlaufenden Messfläche 48, bspw. der Fahrbahn, erzeugt. Auf einer virtuellen, vertikal zur Kraftfahrzeuglängsachse 22 angeordneten Messfläche 48' herrschen jedoch die gleichen Verhältnisse wie in der ersten Messanordnung. Figur 11 zeigt die horizontal und parallel zur Kraftfahrzeuglängsachse 22 angeordnete Messfläche 48 und die virtuelle, senkrecht zur Fahrbahn 14 angeordnete Messfläche 48'. Dazu sind die von der Bilderfassungseinrichtung 16 erfassten Helldunkelgrenzen 42 (vor dem Schwenken) und die entsprechenden Helldunkelgrenzen 42' (nach dem Schwenken) dargestellt. Der Abstand $\Delta X$ entspricht der Entfernung der Helldunkelgrenze 42 gemäß der ersten Messung zur verschwenkten Helldunkelgrenze 42' gemäß der weiteren Messungen. In der gezeigten Messanordnung sind sowohl der linke Scheinwerfer 20 und auch der rechte Scheinwerfer 20 aktiv, wobei jeder der Scheinwerfer 20 eine der beiden Helldunkelgrenze 42 erzeugt. Vorzugsweise erzeugt der rechte Scheinwerfer 20 die rechte Helldunkelgrenze 42 und der linke Scheinwerfer 20 die linke Helldunkelgrenze 42. so dass gleichzeitig beide Scheinwerfer 20 in die Grundeinstellung justiert werden können. Auf der virtuellen Messfläche 48' ergibt sich ein virtuelles Abbild gemäß der Messfläche 48 der ersten Messanordnung aus Figur 7, so dass die im Zusammenhang mit der ersten Messanordnung erläuterten Algorithmen auch hier angewandt werden können.

Die Länge $Z_{vHDG}$ in Figur 9 und 10 definiert eine Projektionslänge der vertikalen Helldunkelgrenze 42 auf der ebenen Messfläche 48, d.h. auf der Fahrbahn. Die virtuelle Messfläche 48' muss in der dritten Messanordnung im Bereich der Länge $Z_{vHDG}$ angeordnet sein. Die Einführung der virtuellen Messfläche 48' führt dazu, dass ein einmaliges Schwenken des Lichtbündels 58 ausreicht, um den Korrekturwinkel k zu berechnen. Dabei werden die gleichen Parameter gemessen wie in der ersten Messanordnung, was dazu führt, dass auch die gleichen Formeln zur Ermittlung des Korrekturfaktors k wie für die erste Messanordnung angewandt werden können.

**Patentansprüche**

1. Verfahren zum Justieren einer Grundeinstellung eines Scheinwerfers (20) eines Kraftfahrzeugs (10), der Scheinwerfer (20) umfassend mindestens eine Lichtquelle zum Aussenden von Licht, wobei der Scheinwerfer (20) ein Lichtbündel (58) mit mindestens einer horizontal und/oder vertikal verlaufenden Helldunkelgrenze (42) erzeugt, **gekennzeichnet durch** die nachfolgenden in der angegebenen Reihenfolge nacheinander ausgeführten Schritte:

   a) Erfassen einer Position der Helldunkelgrenze (42) auf einer vor dem Kraftfahrzeug (10) senkrecht zur Fahrbahn (14) als auch zur Kraftfahrzeuglängsachse (22) angeordneten Messfläche (48; 48') während einer ersten Messung;
   b) Schwenken des Lichtbündels (58) um einen vorgegebenen Schwenkwinkel ($\alpha_{H1}$) in eine Richtung im Wesentlichen senkrecht zur erfassten Helldunkelgrenze (42);
   c) Erfassen einer neuen Position der Helldunkelgrenze (42') auf der Messfläche (48; 48') während einer weiteren Messung;e) Ermitteln eines als Winkel zwischen einer Scheinwerferlängsachse (24) und einer zwischen dem Scheinwerfer (20) und der Helldunkelgrenze (42) in der Grundeinstellung laufenden Linie definierten Korrekturwinkels (k) zum Justieren der Grundeinstellung aus den Ergebnissen der Messungen und anderen bekannten Parametern, wobei die anderen bekannten Parameter mehrere der nachfolgenden Werte umfassen: den vorgegebenen Schwenkwinkel ($\alpha_{H1}$), Komponenten ($X_M$; $Y_M$; $Z_M$) in X-, Y- und/oder Z-Richtung eines Abstands zwischen einer Bilderfassungseinrichtung (16) des Kraftfahrzeugs (10) und der Lichtquelle des Scheinwerfers (20).

2. Verfahren zum Justieren einer Grundeinstellung eines Scheinwerfers (20) eines Kraftfahrzeugs (10), der Scheinwerfer (20) umfassend mindestens eine Lichtquelle zum Aussenden von Licht, wobei der Scheinwerfer (20) ein Lichtbündel (58) mit mindestens einer horizontal und vertikal verlaufenden Helldunkelgrenze (42) erzeugt, **gekennzeichnet durch** die nachfolgenden in der angegebenen Reihenfolge nacheinander ausgeführten Schritte:

   a) Erfassen einer Position einer **vertikalen** Helldunkelgrenze (42) auf einer vor dem Kraftfahrzeug (10) **schräg zu einer Scheinwerferlängsachse (24)** angeordneten Messfläche (48; 48') während einer ersten Messung;
   b) Schwenken des Lichtbündels (58) um einen vorgegebenen Schwenkwinkel ($\alpha_{H1}$) in eine Richtung im Wesentlichen senkrecht zur erfassten Helldunkelgrenze (42);
   c) Erfassen einer neuen Position der Helldunkelgrenze (42') auf der Messfläche (48; 48') während einer weiteren Messung;
   d) **Wiederholen der Schritte b) und c) mit einem vorgegebenen weiteren, neuen Schwenkwinkel ($\alpha_{HX}$) in eine Richtung im Wesentlichen senkrecht zur erfassten Helldunkelgrenze (42);**
   e) Ermitteln eines als Winkel zwischen einer Scheinwerferlängsachse (24) und einer zwischen dem Scheinwerfer (20) und der Helldunkelgrenze (42) in der Grundeinstellung laufenden Linie definierten Korrekturwinkels (k) zum Justieren der Grundeinstellung aus den Ergebnissen der Messungen und anderen bekannten Parametern, wobei die anderen bekannten Parameter mehrere der nachfolgenden Werte umfassen: **die** vorgegebenen Schwenkwinkel ($\alpha_{H1}$, $\alpha_{HX}$), Komponenten ($X_M$; $Y_M$; $Z_M$) in X-, Y- und/oder Z-Richtung eines Abstands zwischen einer Bilderfassungseinrichtung (16) des Kraftfahrzeugs (10) und der Lichtquelle des Scheinwerfers (20).

3. Verfahren nach Anspruch 1 oder 2, **gekennzeichnet durch** mehrfaches Wiederholen der Verfahrensschritte b) und c) mit jeweils neuen Schwenkwinkeln und Berücksichtigen der dabei ermittelten Positionen im Algorithmus um die Genauigkeit zu verbessern.

4. Verfahren nach einem der Ansprüche 1 bis 3, **dadurch gekennzeichnet, dass** der Korrekturwinkel (k) anhand trigonometrischer Formeln berechnet wird.

5. Verfahren nach einem der Ansprüche 1 bis 4, **dadurch gekennzeichnet, dass** anhand der während der Messungen erfassten Positionen der Helldunkelgrenze (42; 42') auf der Messfläche Winkel ($\alpha_{C0}$; $\alpha_{C1}$; $\alpha_{CX}$) ermittelt werden, die sich zwischen einer Längsachse (26) einer Bilderfassungseinrichtung (16) des Kraftfahrzeugs (10) einerseits und Verbindungsgeraden von der Bilderfassungseinrichtung (16) zu den erfassten Positionen der Helldunkelgrenzen (42; 42') andererseits ergeben.

6. Verfahren nach einem der Ansprüche 1 bis 5, **dadurch gekennzeichnet, dass** eine vertikale Helldunkelgrenze (42; 42') durch die Bilderfassungseinrichtung (16) erfasst und eine horizontale Grundeinstellung des Scheinwerfers (20) justiert wird.

7. Verfahren nach einem der vorhergehenden Ansprüche, **dadurch gekennzeichnet, dass** eine horizontale Helldunkelgrenze durch die Bilderfassungseinrichtung (16) erfasst und eine vertikale Grundeinstellung des Scheinwerfers (20) justiert wird.

8. Verfahren nach einem der vorhergehenden Ansprüche, **dadurch gekennzeichnet, dass** ein Abstand ($Z_C$) zwischen der Messfläche (48; 48') und der Bilderfassungseinrichtung (16) anhand trigonometrischer Funktionen aus den während der Messungen erfassten Positionen der Helldunkelgrenze (42; 42') ermittelt wird.

9. Verfahren nach einem der vorhergehenden Ansprüche, **dadurch gekennzeichnet, dass** die Messfläche (48; 48') entweder vertikal oder horizontal und parallel zu einer Kraftfahrzeuglängsachse (22) angeordnet ist.

10. Vorrichtung (52) zum Justieren einer Grundeinstellung eines Scheinwerfers (20) eines Kraftfahrzeugs (10), der Scheinwerfer (20) umfassend mindestens eine Lichtquelle zum Aussenden von Licht, wobei der Scheinwerfer (20) ein Lichtbündel (58) mit mindestens einer horizontal und/oder vertikal verlaufenden Helldunkelgrenze (42) erzeugt, **dadurch gekennzeichnet, dass**

- eine Bilderfassungseinrichtung (16) und Bildverarbeitungseinrichtung (54) zum Erfassen und Ermitteln einer Position der Helldunkelgrenze (42; 42') auf einer vor dem Kraftfahrzeug (10) senkrecht zur Fahrbahn (14) als auch zur Kraftfahrzeuglängsachse (22) angeordneten Messfläche (48; 48') während einer ersten Messung ausgebildet ist,
- Mittel zum Schwenken des Lichtbündels (58) um einen vorgegebenen Schwenkwinkel ($\alpha_{H1}$) in eine Richtung im Wesentlichen senkrecht zur erfassten Helldunkelgrenze (42) vorgesehen sind,
- die Bilderfassungseinrichtung (16) und Bildverarbeitungseinrichtung (54) zum Erfassen und Ermitteln einer neuen Position der Helldunkelgrenze (42; 42') auf der Messfläche (48; 48') nach dem Schwenken des Lichtbündels (58) während einer weiteren Messung ausgebildet sind, und
- die Vorrichtung (52) eine Auswerteinheit (62) zum Ermitteln eines als Winkel zwischen einer Scheinwerferlängsachse (24) und einer zwischen dem Scheinwerfer (20) und der Helldunkelgrenze (42) in der Grundeinstellung laufenden Linie definierten Korrekturwinkels (k) zum Justieren der Grundeinstellung aus den Ergebnissen der Messungen ($\alpha_{C0}$; $\alpha_{C1}$; $\alpha_{CX}$) und anderen bekannten Parametern ($\alpha_{H1}$; $X_M$; $Y_M$; $Z_M$) aufweist, wobei die anderen bekannten Parameter mehrere der nachfolgenden Werte umfassen: den vorgegebenen Schwenkwinkel ($\alpha_{H1}$), Komponenten ($X_M$; $Y_M$; $Z_M$) in X-, Y- und/oder Z-Richtung eines Abstands zwischen einer Bilderfassungseinrichtung (16) des Kraftfahrzeugs (10) und der Lichtquelle des Scheinwerfers (20).

11. Vorrichtung (52) zum Justieren einer Grundeinstellung eines Scheinwerfers (20) eines Kraftfahrzeugs (10), der Scheinwerfer (20) umfassend mindestens eine Lichtquelle zum Aussenden von Licht, wobei der Scheinwerfer (20) ein Lichtbündel (58) mit mindestens einer horizontal und/oder vertikal verlaufenden Helldunkelgrenze (42) erzeugt, **dadurch gekennzeichnet, dass**

- eine Bilderfassungseinrichtung (16) und Bildverarbeitungseinrichtung (54) zum Erfassen und Ermitteln einer Position der Helldunkelgrenze (42; 42') auf einer vor dem Kraftfahrzeug (10) **schräg zu einer Scheinwerferlängsachse (24)** angeordneten Messfläche (48; 48') während einer ersten Messung ausgebildet ist,
- Mittel zum Schwenken des Lichtbündels (58) um einen vorgegebenen Schwenkwinkel ($\alpha_{H1}$) in eine Richtung im Wesentlichen senkrecht zur erfassten Helldunkelgrenze (42) vorgesehen sind,
- die Bilderfassungseinrichtung (16) und Bildverarbeitungseinrichtung (54) zum Erfassen und Ermitteln einer neuen Position der Helldunkelgrenze (42; 42') auf der Messfläche (48; 48') nach dem Schwenken des Lichtbündels (58) während einer weiteren Messung ausgebildet sind, **und die Vorrichtung dazu eingerichtet ist, das Lichtbündel (58) mit einem vorgegebenen weiteren, neuen Schwenkwinkel ($\alpha_{HX}$) in eine Richtung im Wesentlichen senkrecht zur erfassten Helldunkelgrenze (42) zu schwenken;**

- die Vorrichtung (52) eine Auswerteinheit (62) zum Ermitteln eines als Winkel zwischen einer Scheinwerferlängsachse (24) und einer zwischen dem Scheinwerfer (20) und der Helldunkelgrenze (42) in der Grundeinstellung laufenden Linie definierten Korrekturwinkels (k) zum Justieren der Grundeinstellung aus den Ergebnissen der Messungen ($\alpha_{C0}$; $\alpha_{C1}$; $\alpha_{CX}$) und anderen bekannten Parametern ($\alpha_{H1}$; $X_M$; $Y_M$; $Z_M$) aufweist, wobei die anderen bekannten Parameter mehrere der nachfolgenden Werte umfassen: den vorgegebenen Schwenkwinkel ($\alpha_{H1}$), Komponenten ($X_M$; $Y_M$; $Z_M$) in X-, Y- und/oder Z-Richtung eines Abstands zwischen einer Bilderfassungseinrichtung (16) des Kraftfahrzeugs (10) und der Lichtquelle des Scheinwerfers (20) .

**12.** Vorrichtung (52) nach Anspruch 10 oder 11, **dadurch gekennzeichnet, dass** die Vorrichtung (52) Mittel zur Ausführung des Verfahrens gemäß einem oder mehreren der Ansprüche 3 bis 9 aufweist.

**13.** Vorrichtung (52) nach einem der Ansprüche 10 oder 12, **dadurch gekennzeichnet, dass** die Bildverarbeitungseinrichtung (54) und die Auswerteinheit (62) integraler Bestandteil eines Steuergeräts des Scheinwerfers (20) sind.

**14.** Vorrichtung (52) nach einem der Ansprüche 10 bis 13, **dadurch gekennzeichnet, dass** als Bilderfassungseinrichtung (16) eine Kamera genutzt wird, die in dem Kraftfahrzeug (10) bereits für andere Assistentensysteme installiert ist.

**Claims**

**1.** Method for adjusting a default setting of a headlight (20) of a motor vehicle (10), the headlight (20) comprising at least one light source for emitting light, the headlight (20) producing a light beam (58) having at least one horizontally and/or vertically extending light-dark boundary (42), **characterized by** the following steps performed sequentially in the specified order:

a) detecting a position of the light-dark boundary (42) on a measuring surface (48; 48') arranged in front of the motor vehicle (10) perpendicularly to the roadway (14) and to the motor vehicle longitudinal axis (22) during a first measurement;
b) pivoting the light beam (58) by a specified pivot angle ($\alpha_{H1}$) in a direction substantially perpendicular to the detected light-dark boundary (42);
c) detecting a new position of the light-dark boundary (42') on the measuring surface (48; 48') during a further measurement;
e) determining a correction angle (k) defined as an angle between a headlight longitudinal axis (24) and a line extending between the headlight (20) and the light-dark boundary (42) in the default setting so as to adjust the default setting from the results of the measurements and other known parameters, the other known parameters comprising a plurality of the following values: the specified pivot angle ($\alpha_{H1}$), components ($X_M$; $Y_M$; $Z_M$) in the X, Y and/or Z direction of a distance between an image-detecting apparatus (16) of the motor vehicle (10) and the light source of the headlight (20).

**2.** Method for adjusting a default setting of a headlight (20) of a motor vehicle (10), the headlight (20) comprising at least one light source for emitting light, the headlight (20) producing a light beam (58) having at least one horizontally and/or vertically extending light-dark boundary (42), **characterized by** the following steps performed sequentially in the specified order:

a) detecting a position of a vertical light-dark boundary (42) on a measuring surface (48; 48') arranged in front of the motor vehicle (10) obliquely relative to a headlight longitudinal axis (24) during a first measurement;
b) pivoting the light beam (58) by a specified pivot angle ($\alpha_{H1}$) in a direction substantially perpendicular to the detected light-dark boundary (42);
c) detecting a new position of the light-dark boundary (42') on the measuring surface (48; 48') during a further measurement;
d) repeating steps b) and c) using a specified further, new pivot angle ($\alpha_{HX}$) in a direction substantially perpendicular to the detected dark-light boundary (42);
e) determining a correction angle (k) defined as an angle between a headlight longitudinal axis (24) and a line extending between the headlight (20) and the light-dark boundary (42) in the default setting so as to adjust the default setting from the results of the measurements and other known parameters, the other known parameters comprising a plurality of the following values: the specified pivot angles ($\alpha_{H1}$, $\alpha_{HX}$), components ($X_M$; $Y_M$; $Z_M$) in the X, Y and/or Z direction of a distance between an image-detecting apparatus (16) of the motor vehicle (10) and the light source of the headlight (20).

3.  Method according to claim 1 or claim 2, **characterized by** repeating the method steps b) and c) multiple times using new pivot angles each time and considering the positions in the algorithm determined in each case, in order to improve the accuracy.

4.  Method according to any of claims 1 to 3, **characterized in that** the correction angle (k) is calculated on the basis of trigonometric formulas.

5.  Method according to any of claims 1 to 4, **characterized in that** angles ($\alpha_{C0}$; $\alpha_{C1}$; $\alpha_{CX}$) are determined using the positions of the light-dark boundary (42; 42') detected during the measurements on the measuring surface, which angles arise between a longitudinal axis (26) of an image-detecting apparatus (16) of the motor vehicle (10) and connecting lines from the image-detecting apparatus (16) to the detected positions of the light-dark boundaries (42; 42').

6.  Method according to any of claims 1 to 5, **characterized in that** a vertical light-dark boundary (42; 42') is detected by the image-detecting apparatus (16), and a horizontal default setting of the headlight (20) is adjusted.

7.  Method according to any of the preceding claims, **characterized in that** a horizontal light-dark boundary is detected by the image-detecting apparatus (16), and a vertical default setting of the headlight (20) is adjusted.

8.  Method according to any of the preceding claims, **characterized in that** a distance ($Z_C$) between the measuring surface (48; 48') and the image-detecting apparatus (16) is determined on the basis of trigonometric functions from the positions of the light-dark boundary (42; 42') detected during the measurements.

9.  Method according to any of the preceding claims, **characterized in that** the measuring surface (48; 48') is arranged either vertically or horizontally and in parallel with a motor vehicle longitudinal axis (22).

10.  Device (52) for adjusting a default setting of a headlight (20) of a motor vehicle (10), the headlight (20) comprising at least one light source for emitting light, the headlight (20) producing a light beam (58) having at least one horizontally and/or vertically extending light-dark boundary (42), **characterized in that**

    - an image-detecting apparatus (16) and image-processing apparatus (54) are designed to detect and determine a position of the light-dark boundary (42; 42') on a measuring surface (48; 48') arranged in front of the motor vehicle (10) perpendicularly to the roadway (14) and to the motor vehicle longitudinal axis (22) during a first measurement,
    - means for pivoting the light beam (58) by a specified pivot angle ($\alpha_{H1}$) in a direction substantially perpendicular to the detected dark-light boundary (42) are provided,
    - the image-detecting apparatus (16) and image-processing device (54) are designed to detect and determine a new position of the light-dark boundary (42; 42') on the measuring surface (48; 48') after the light beam (58) has been pivoted during a further measurement, and
    - the device (52) has an evaluation unit (62) for determining a correction angle (k) defined as an angle between a headlight longitudinal axis (24) and a line extending between the headlight (20) and the light-dark boundary (42) in the default setting so as to adjust the default setting from the results of the measurements ($\alpha_{H0}$, $\alpha_{C1}$; $\alpha_{CX}$) and other known parameters ($\alpha_{H1}$; $X_M$; $Y_M$; $Z_M$), the other known parameters comprising a plurality of the following values: the specified pivot angle ($\alpha_{H1}$), components ($X_M$; $Y_M$; $Z_M$) in the X, Y and/or Z direction of a distance between an image-detecting apparatus (16) of the motor vehicle (10) and the light source of the headlight (20).

11.  Device (52) for adjusting a default setting of a headlight (20) of a motor vehicle (10), the headlight (20) comprising at least one light source for emitting light, the headlight (20) producing a light beam (58) having at least one horizontally and/or vertically extending light-dark boundary (42), **characterized in that**

    - an image-detecting apparatus (16) and image-processing apparatus (54) are designed to detect and determine a position of the light-dark boundary (42; 42') on a measuring surface (48; 48') arranged in front of the motor vehicle (10) obliquely relative to a headlight longitudinal axis (24) during a first measurement,
    - means for pivoting the light beam (58) by a specified pivot angle ($\alpha_{H1}$) in a direction substantially perpendicular to the detected light-dark boundary (42) are provided,
    - the image-detecting apparatus (16) and image-processing apparatus (54) are designed to detect and determine a new position of the light-dark boundary (42; 42') on the measuring surface (48; 48') after the light beam (58) has been pivoted during a further measurement, and the device is set up to pivot the light beam (58) having a specified further, new pivot angle ($\alpha_{HX}$) in a direction substantially perpendicular to the detected light-dark boundary (42);

- the device (52) has an evaluation unit (62) for determining a correction angle (k) defined as an angle between a headlight longitudinal axis (24) and a line extending between the headlight (20) and the light-dark boundary (42) in the default setting so as to adjust the default setting from the results of the measurements ($\alpha_{C0}$, $\alpha_{C1}$; $\alpha_{CX}$) and other known parameters ($\alpha_{H1}$; $X_M$; $Y_M$; $Z_M$), the other known parameters comprising a plurality of the following values: the specified pivot angle ($\alpha_{H1}$), components ($X_M$; $Y_M$; $Z_M$) in the X, Y and/or Z direction of a distance between an image-detecting apparatus (16) of the motor vehicle (10) and the light source of the headlight (20).

12. Device (52) according to claim 10 or claim 11, **characterized in that** the device (52) has means for performing the method according to one or more of claims 3 to 9.

13. Device (52) according to any of claims 10 to 12, **characterized in that** the image-processing apparatus (54) and the evaluation unit (62) are integral elements of a control unit of the headlight (20).

14. Device (52) according to any of claims 10 to 13, **characterized in that** a camera which is already installed for other assistance systems in the motor vehicle (10) is used as an image-detecting apparatus (16).

**Revendications**

1. Procédé d'ajustage d'un réglage de base d'un projecteur (20) d'un véhicule automobile (10), le projecteur (20) comprenant au moins une source de lumière pour émettre de la lumière, le projecteur (20) générant un faisceau lumineux (58) ayant au moins une limite claire-obscure (42) s'étendant horizontalement et/ou verticalement, **caractérisé par** les étapes suivantes mises en oeuvre les unes après les autres dans l'ordre indiqué:

   a) détecter, pendant une première mesure, une position de la limite claire-obscure (42) sur une surface de mesure (48; 48') disposée devant le véhicule automobile (10) perpendiculairement aussi bien à la chaussée (14) qu'à l'axe longitudinal de véhicule automobile (22);
   b) faire pivoter le faisceau lumineux (58) selon un angle de pivotement prédéterminé ($\alpha_{H1}$) dans une direction pour l'essentiel perpendiculaire à la limite claire-obscure (42) détectée;
   c) détecter une nouvelle position de la limite claire-obscure (42') sur la surface de mesure (48, 48') pendant une autre mesure;
   e) déterminer un angle de correction (k) défini en tant qu'angle entre un axe longitudinal de projecteur (24) et une ligne s'étendant entre le projecteur (20) et la limite claire-obscure (42) dans le réglage de base, pour ajuster le réglage de base à partir des résultats des mesures et d'autres paramètres connus, dans lequel lesdits autres paramètres connus comprennent plusieurs des valeurs suivantes: l'angle de pivotement ($\alpha_{H1}$) prédéterminé, des composants ($X_M$; $Y_M$; $Z_M$) dans la direction X, Y et/ou Z d'une distance entre un dispositif d'acquisition d'images (16) du véhicule automobile (10) et la source de lumière du projecteur (20).

2. Procédé d'ajustage d'un réglage de base d'un projecteur (20) d'un véhicule automobile (10), le projecteur (20) comprenant au moins une source de lumière pour émettre de la lumière, le projecteur (20) générant un faisceau lumineux (58) ayant au moins une limite claire-obscure (42) s'étendant horizontalement et verticalement, **caractérisé par** les étapes suivantes mises en oeuvre les unes après les autres dans l'ordre indiqué:

   a) détecter, pendant une première mesure, une position d'une limite claire-obscure (42) verticale sur une surface de mesure (48; 48') disposée devant le véhicule automobile (10) obliquement par rapport à un axe longitudinal de projecteur (24);
   b) faire pivoter le faisceau lumineux (58) selon un angle de pivotement prédéterminé ($\alpha_{H1}$) dans une direction pour l'essentiel perpendiculaire à la limite claire-obscure (42) détectée;
   c) détecter une nouvelle position de la limite claire-obscure (42') sur la surface de mesure (48; 48') pendant une autre mesure;
   d) répéter les étapes b) et c) avec un autre nouvel angle de pivotement ($\alpha_{HX}$) prédéterminé dans une direction pour l'essentiel perpendiculaire à la limite claire-obscure (42) détectée;
   e) déterminer un angle de correction (k) défini en tant qu'angle entre un axe longitudinal de projecteur (24) et une ligne s'étendant entre le projecteur (20) et la limite claire-obscure (42) dans le réglage de base, pour ajuster le réglage de base à partir des résultats des mesures et d'autres paramètres connus, dans lequel lesdits autres paramètres connus comprennent plusieurs des valeurs suivantes: les angles de pivotement ($\alpha_{H1}$, $\alpha_{HX}$) prédéterminés, des composants ($X_M$; $Y_M$; $Z_M$) dans la direction X, Y et/ou Z d'une distance entre un dispositif d'acquisition d'images (16) du véhicule automobile (10) et la source de lumière du projecteur (20).

3. Procédé selon la revendication 1 ou 2, **caractérisé par** une répétition multiple des étapes de procédé b) et c) avec des angles de pivotement respectivement nouveaux et en prenant en considération, dans l'algorithme, les positions déterminées durant cela afin d'améliorer la précision.

4. Procédé selon l'une quelconque des revendications 1 à 3, **caractérisé par le fait que** l'angle de correction (k) est calculé à l'aide de formules trigonométriques.

5. Procédé selon l'une quelconque des revendications 1 à 4, **caractérisé par le fait qu'**à partir des positions de la limite claire-obscure (42) sur la surface de mesure qui sont déterminées pendant les mesures sont déterminés des angles ($\alpha_{CO}$, $\alpha_{c1}$, $\alpha_{CX}$) qui résultent entre un axe longitudinal (26) d'un dispositif d'acquisition d'images (16) du véhicule automobile (10) d'un côté et des droites de liaison s'étendant du dispositif d'acquisition d'images (16) aux positions détectées des limites claires-obscures (42; 42'), de l'autre côté.

6. Procédé selon l'une quelconque des revendications 1 à 5, **caractérisé par le fait qu'**une limite claire-obscure verticale (42; 42') est détectée par ledit dispositif d'acquisition d'images (16) et qu'un réglage de base horizontal du projecteur (20) est ajusté.

7. Procédé selon l'une quelconque des revendications précédentes, **caractérisé par le fait qu'**une limite claire-obscure horizontale est détectée par le dispositif d'acquisition d'images (16) et qu'un réglage de base vertical du projecteur (20) est ajusté.

8. Procédé selon l'une quelconque des revendications précédentes, **caractérisé par le fait qu'**une distance ($Z_C$) entre la surface de mesure (48; 48') et le dispositif d'acquisition d'images (16) est déterminée à l'aide de fonctions trigonométriques à partir des positions de la limite claire-obscure (42, 42') qui sont détectées durant les mesures.

9. Procédé selon l'une quelconque des revendications précédentes, **caractérisé par le fait que** la surface de mesure (48; 48') est agencée soit verticalement soit horizontalement et parallèlement à un axe longitudinal de véhicule automobile (22).

10. Dispositif (52) d'ajustage d'un réglage de base d'un projecteur (20) d'un véhicule automobile (10), le projecteur (20) comprenant au moins une source de lumière pour émettre de la lumière, le projecteur (20) générant un faisceau lumineux (58) ayant au moins une limite claire-obscure (42) s'étendant horizontalement et/ou verticalement, **caractérisé par le fait que**

- un dispositif d'acquisition d'images (16) et un dispositif de traitement d'images (54) sont conçus pour détecter et déterminer, pendant une première mesure, une position de la limite claire-obscure (42; 42') sur une surface de mesure (48; 48') disposée devant le véhicule automobile (10) perpendiculairement aussi bien à la chaussée (14) qu'à l'axe longitudinal de véhicule automobile (22);
- des moyens destinés à faire pivoter le faisceau lumineux (58) selon un angle de pivotement prédéterminé ($\alpha_{H1}$) dans une direction pour l'essentiel perpendiculaire à la limite claire-obscure (42) détectée sont prévus;
- le dispositif d'acquisition d'images (16) et le dispositif de traitement d'images (54) sont conçus pour détecter et déterminer une nouvelle position de la limite claire-obscure (42, 42') sur la surface de mesure (48; 48') après le pivotement du faisceau lumineux (58), pendant une autre mesure, et
- le dispositif (52) comprend une unité d'évaluation (62) destinée à déterminer un angle de correction (k) défini en tant qu'angle entre un axe longitudinal de projecteur (24) et une ligne s'étendant entre le projecteur (20) et la limite claire-obscure (42) dans le réglage de base, pour ajuster le réglage de base à partir des résultats des mesures ($\alpha_{CO}$, $\alpha_{C1}$, $\alpha_{CX}$) et d'autres paramètres ($\alpha_{H1}$, $X_M$; $Y_M$; $Z_M$) connus, dans lequel lesdits autres paramètres connus comprennent plusieurs des valeurs suivantes: l'angle de pivotement ($\alpha_{H1}$) prédéterminé, des composants ($X_M$; $Y_M$; $Z_M$) dans la direction X, Y et/ou Z d'une distance entre un dispositif d'acquisition d'images (16) du véhicule automobile (10) et la source de lumière du projecteur (20).

11. Dispositif (52) d'ajustage d'un réglage de base d'un projecteur (20) d'un véhicule automobile (10), le projecteur (20) comprenant au moins une source de lumière pour émettre de la lumière, le projecteur (20) générant un faisceau lumineux (58) ayant au moins une limite claire-obscure (42) s'étendant horizontalement et/ou verticalement, **caractérisé par le fait que**

- un dispositif d'acquisition d'images (16) et un dispositif de traitement d'images (54) sont conçus pour détecter et déterminer, pendant une première mesure, une position de la limite claire-obscure (42; 42') sur une surface de mesure (48; 48') disposée devant le véhicule automobile (10) obliquement par rapport à un axe longitudinal de véhicule automobile (22),
- des moyens destinés à faire pivoter le faisceau lumineux (58) selon un angle de pivotement prédéterminé ($\alpha_{H1}$) dans une direction pour l'essentiel perpendiculaire à la limite claire-obscure (42) détectée,
- le dispositif d'acquisition d'images (16) et le dispositif de traitement d'images (54) sont conçus pour détecter et déterminer une nouvelle position de la limite claire-obscure (42, 42') sur la surface de mesure (48; 48') après le pivotement du faisceau lumineux (58), pendant une autre mesure, et le dispositif est configuré pour faire pivoter le faisceau lumineux (58) avec un autre nouvel angle de pivotement prédéterminé dans une direction pour l'essentiel perpendiculaire à la limite claire-obscure (42) détectée,
- le dispositif (52) comprend une unité d'évaluation (62) destinée à déterminer un angle de correction (k) défini en tant qu'angle entre un axe longitudinal de projecteur (24) et une ligne s'étendant entre le projecteur (20) et la limite claire-obscure (42) dans le réglage de base, pour ajuster le réglage de base à partir des résultats des mesures ($\alpha_{C0}$; $\alpha_{C1}$; $\alpha_{CX}$) et d'autres paramètres ($\alpha_{H1}$, $X_M$; $Y_M$; $Z_M$) connus, dans lequel lesdits autres paramètres connus comprennent plusieurs des valeurs suivantes: l'angle de pivotement ($\alpha_{H1}$) prédéterminé, des composants ($X_M$; $Y_M$; $Z_M$) dans la direction X, Y et/ou Z d'une distance entre un dispositif d'acquisition d'images (16) du véhicule automobile (10) et la source de lumière du projecteur (20).

12. Dispositif (52) selon la revendication 10 ou 11, **caractérisé par le fait que** le dispositif (52) comprend des moyens de mise en oeuvre du procédé selon l'une ou plusieurs des revendications 3 à 9.

13. Dispositif (52) selon l'une quelconque des revendications 10 ou 12, **caractérisé par le fait que** le dispositif de traitement d'images (54) et l'unité d'évaluation (62) font partie intégrale d'un appareil de commande du projecteur (20).

14. Dispositif (52) selon l'une quelconque des revendications 10 à 13, **caractérisé par le fait qu'**une caméra est utilisée en tant que dispositif d'acquisition d'images (16), qui est installée à l'intérieur du véhicule automobile (10) déjà pour d'autres systèmes d'assistance.

Fig. 1

EP 2 485 032 B1

Fig. 2

Fig. 3

Fig. 4

Fig. 5

Fig. 6

Fig. 7

Fig. 8

EP 2 485 032 B1

Fig. 9

Fig. 10

EP 2 485 032 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2128590 A1
- EP 2050618 A2